# EUROPEAN PATENT SPECIFICATION

(11) **EP 4 475 290 B1**
(45) Date of publication and mention of the grant of the patent: **16.09.2026**
(21) Application number: 24179386.8
(22) Date of filing: 31.05.2024
(51) Int. Cl.: H01M 50/107, H01M 50/169, H01M 50/533, H01M 50/538, H01M 50/152, H01M 50/559, H01M 50/566

(54) **SEAM WELDING STRUCTURE OF BATTERY CAN, CURRENTCOLLECTING PLATE, AND CAP AND BATTERY CELL USING THE SAME**
NAHTSCHWEISSSTRUKTUR EINER BATTERIEDOSE, STROMSAMMELPLATTE UND KAPPE UND BATTERIEZELLE DAMIT
STRUCTURE DE SOUDAGE DE JOINT DE BOÎTIER DE BATTERIE, PLAQUE DE COLLECTE DE COURANT, ET CAPUCHON ET ÉLÉMENT DE BATTERIE L'UTILISANT

(30) Priority: 07.06.2023 KR 20230073032; 11.10.2023 KR 20230135318; 28.05.2024 KR 20240069605
(43) Date of publication of application: 11.12.2024
(73) Proprietor: LG Energy Solution, Ltd., Seoul 07335 (KR)
(72) Inventor: HWANG, Dongsung, 34122 Daejeon (KR); CHO, Sungmin, 34122 Daejeon (KR); HONG, Taerim, 34122 Daejeon (KR); PARK, Jeongho, 34122 Daejeon (KR)
(74) Representative: Goddar, Heinz J.

(56) References cited:
- WO-A1-2023/050282
- WO-A1-2023/090952
- US-A1- 2015 318 517
- US-A1- 2023 006 289

## Description

### BACKGROUND

The present disclosure relates to the field of batteries, and in particular a welding structure of a battery can, a current collector plate, and a cap, as well as a battery cell to which the same is applied.

The process of manufacturing a cylindrical cell battery may include deep drawing a metal sheet to form a can with a circular bottom and a circular tube-shaped sidewall member connected to the circular bottom, followed by accommodating an electrode assembly in the can, and then covering the open end of the sidewall member with a cap. Meanwhile, a current collector plate, which is in contact with and electrically connected to at least one electrode tab of the electrode assembly, is provided at one of two axial ends of the electrode assembly - namely the one that faces the open end. The current collector plate is in contact with and electrically connected to the cap or the sidewall member through a method wherein the current collector plate is welded to the cap or the sidewall member.

The processes of connecting (e.g., by welding) the current collector plate to the cap or the sidewall member as well as connecting the cap to the sidewall member are individually performed for each cell. The labor intensive and time consuming process of connecting these components individually reduces production efficiency and increases production costs for manufacturing cylindrical battery cells.

To avoid such individual welding processes, welding the sidewall member, the cap and the current collector plate all at once may be considered, which may be performed by laser. However, during mass production, it is difficult to quickly assemble the three components (e.g., the sidewall member, the cap and the current collector plate) and hold them together firmly enough to allow for a strong weld.

Moreover, when the laser is irradiated with the sidewall member, the cap and the current collector plate may be crudely assembled, and gaps may exist due to the tolerances of each part of the sidewall member, the cap, and the current collector plate, due to assembly errors thereof. When a laser is irradiated for assembly with such a gaps present, the laser may penetrate directly into the can, thereby causing damage to the electrode assembly accommodated in the can. Improvements to the assembly of the cylindrical battery cell are therefore desirable.

WO 2023/090952 A1 describes a secondary battery that includes an electrode assembly, a case with an open surface, a vent, and a first current collecting plate electrically connected to the electrode assembly and welded to either the case or the vent. The first current collecting plate is designed to be bent one or more times to enhance the stability and durability of the battery by preventing movement due to external vibrations and pressures. The first axial end of the case being provided with an open end includes a stepped portion which is radially recessed.

US 2023/006289 A1 describes a secondary battery that includes an electrode assembly with a first electrode plate, a second electrode plate, and a separator. The battery also features a case with an opening to accommodate the electrode assembly, a cap plate sealing the case, and a first current collector plate that electrically connects the first electrode plate to the cap plate. The first axial end of the case being provided with an open end includes a stepped portion which is radially recessed.

### SUMMARY OF THE DISCLOSURE

The present disclosure provides a welding structure of a battery can, current collector plate, and cap, and a battery cell to which the same are applied, wherein the process of welding the current collector plate to the can and the process of welding the cap to the sidewall member are integrated into a single welding process, thereby increasing the production efficiency of the cylindrical battery cell and reducing the production cost. Additionally or alternatively, the structure may prevent the laser from penetrating directly into the can during the laser welding process even when part tolerance and assembly errors of the sidewall member, the cap, and the current collector plate occur.

In addition, or alternatively, the assembly of the can, the current collector plate, and the cap may be facilitated. In-place alignment and close contact may be achieved through a mutual contact structure in the assembly process, thereby facilitating triple welding. The shapes and/or engagement relationships between the can, the current collector plate, and the cap of the present disclosure may also beneficially increase the effectiveness and/or durability of the welds, and/or may increase process stability.

The technical problems solved by the present disclosure are not limited to the objects described above, however, but rather other objects and advantages of the present disclosure that are not described may be understood through the following description and examples. While circular cylindrical cell batteries are described herein, aspects of this disclosure may apply to other similar battery shapes that are not circular cylindrical, such as an oblique or elliptical cylinder, as well as other battery form factors such as pouch cell batteries or prismatic cell batteries.

### [TECHNICAL SOLUTION]

In order to solve above-described problem, a battery cell according to the independent claim 1 is provided including an electrode assembly, a current collector plate electrically connected to the electrode assembly, and a can that receives or accommodates the electrode assembly and the current collector plate therein.

The can includes a sidewall member extending in an axial direction and an open end provided at one *(e.g.,* a first) axial end of the sidewall member.

The battery cell includes a cap that covers the open end.

A bottom member is connected to the other axial end *(e.g.,* a second end opposite the first end) of the sidewall member, and thus the other axial end of the sidewall member may constitute a closed end.

The electrode assembly may be in a form of a jelly-roll wound around a predetermined axis.

An electrode tab may be provided at one end corresponding to the open end of the can among two ends of the electrode assembly in the axial direction, and the current collector plate may be electrically connected to the electrode tab.

The current collector plate may include an electrode tab connecting part in contact with and electrically connected to the electrode tab.

The electrode tab connecting part may be bonded to the electrode tab. The bonding may be performed by welding, brazing or soldering.

The current collector plate includes a can connecting part in contact with and electrically connected to the can.

The can connecting part and the electrode tab connecting part may be electrically connected.

The can connecting part may be disposed at a radially outer side than the electrode tab connecting part.

The can connecting part may extend in the axial direction.

The can connecting part may be connected to the electrode tab connecting part through the bent part.

The bent part may be where the current collector plate extending outward in the radial direction is bent outward in the axial direction.

The can connecting part may extend from the bent part toward an axially outer side.

The can connecting part has an outer circumferential contact surface defined by the outer circumference of the can connecting part.

The outer circumferential contact surface faces the inner circumferential surface of the sidewall member in a radial direction.

At least a section in the axial direction of the outer circumferential contact surface defines a first section where the outer circumferential contact surface is in contact with the inner circumferential surface of the sidewall member in the radial direction.

The can connecting part is provided with a cap contact surface defined by an axially outer end surface.

The cap contact surface faces and is in contact with the inner surface of the cap in the axial direction.

The cap includes an outer circumferential bonding surface facing and in contact with the inner circumferential surface of the sidewall member in the radial direction.

The outer circumferential bonding surface may be in contact with the inner circumferential surface of the sidewall member in the radial direction.

The cap has a current collector plate contact surface defined by an axially inner surface.

The current collector plate contact surface faces and is in contact with the cap contact surface of the can connecting part of the current collector plate in the axial direction.

The outer circumferential bonding surface of the cap may be disposed axially outward relative to the current collector plate contact surface.

The outer circumferential bonding surface of the cap may be disposed radially outer relative to the current collector plate contact surface.

At least a portion of the inner circumferential surface of the sidewall member and at least a portion of the outer circumferential contact surface of the current collector plate may be bonded.

At least a portion of the inner circumferential surface of the sidewall member and at least a portion of the outer circumferential bonding surface of the cap may be bonded.

At least a portion of the cap contact surface of the current collector plate and at least a portion of the current collector plate contact surface of the cap may be bonded.

The bonding may be performed by welding.

The sidewall member, the cap and the current collector plate may be triple welded together.

The welding may be performed by a laser irradiated to the contact area of the inner circumferential surface of the sidewall member and the outer circumferential bonding surface of the cap in the axial direction.

At least a portion of the inner circumferential surface of the sidewall member, at least a portion of the outer circumferential bonding surface of the cap, and at least a portion of the can connecting part of the current collector plate may be welded together for bonding.

The outer diameter of at least a section in the axial direction of the outer circumferential contact surface may be larger than the inner diameter of the inner circumferential surface of the sidewall member facing the section in the radial direction.

The outer diameter of the first section of the outer circumferential contact surface may be larger than the inner diameter of the inner circumferential surface of the sidewall member facing the same in the radial direction. Accordingly, when the current collector plate is inserted into the can, the first section of the outer circumferential contact surface of the current collector plate may be subjected to a forced press-fit into the sidewall member.

The battery cell may include a welding portion where the inner circumferential surface of the sidewall member, the outer circumferential bonding surface of the cap and the can connecting part of the current collector plate are welded together.

Each of the outer circumferential bonding surface of the cap and the outer circumferential contact surface of the can connecting part may face the inner circumferential surface of the sidewall member in the radial direction.

Each of the outer circumferential bonding surface of the cap and the outer circumferential contact surface of the can connecting part may be in contact with the inner circumferential surface of the sidewall member in the radial direction.

The axial ends of the outer circumferential bonding surface of the cap and the inner circumferential surface of the sidewall member, which face or are in contact with each other in the radial direction, may be exposed at an axially outer side of the can.

The welding portion may be formed by a laser irradiated in the axial direction from the axially outer side of the battery cell toward the axial ends of the outer circumferential bonding surface of the cap and the inner circumferential surface of the sidewall member.

According to the present disclosure, the first section of the outer circumferential contact surface of the current collector plate disposed axially inward of the cap faces and is in contact with the inner circumferential surface of the sidewall member, thereby preventing the laser from being directly irradiated into the inner space of the can.

The current collector plate may have higher thermal conductivity than the sidewall member. Accordingly, the welding heat is dispersed to the electrode assembly through the current collector plate, thereby preventing the damage of the separator provided on the outer circumferential surface of the electrode assembly caused by the welding heat transmitted to the outer circumferential surface of the electrode assembly through the sidewall member.

An inner diameter expansion part may be provided at one axial end of the sidewall member.

The first inner circumferential surface of the sidewall member provided axially inward of the inner diameter expansion part may have a smaller inner diameter than the second inner circumferential surface of the sidewall member provided axially outward of the inner diameter expansion part.

The inner diameter expansion part may have a shape wherein the inner diameter of the sidewall member expands as the inner diameter expansion part extends toward the axially outer side.

The inner diameter expansion part is provided on the inner surface of the sidewall member and may include an inclined surface extending further outward in the radial direction as the inner diameter expansion part extends toward the axially outer side.

The inner diameter expansion part may prevent internal penetration of the laser that may enter through the gap between the sidewall member and the cap or the current collector plate.

At least a portion of the first section of the outer circumferential contact surface in the axial direction may be in contact with the first inner circumferential surface.

At least a portion of the first section of the outer circumferential contact surface in the axial direction may also be in contact with the inner diameter expansion part.

At least a portion of the first section of the outer circumferential contact surface in the axial direction may also be in contact with the second outer circumferential surface.

The outer diameter of the first section of the outer circumferential contact surface may be larger than the inner diameter of the first inner circumferential surface.

The outer diameter of the outer circumferential contact surface of the can connecting part of the current collector plate may be larger than the inner diameter of the first inner circumferential surface.

The material of the current collector plate may be softer than that of the sidewall member.

When the outer diameter of the outer circumferential contact surface is selected to be slightly larger than the inner diameter of the first inner circumferential surface, the outer circumferential contact surface may be pressed onto the first inner circumferential surface during the inserting process of the current collector plate, thereby bringing the outer circumferential contact surface and the first inner circumferential surface into close contact in the radial direction.

As a result, with the current collector plate inserted, the outer diameter of the first section of the outer circumferential contact surface in contact with the first inner circumferential surface may correspond to the inner diameter of the first inner circumferential surface.

A curved surface where the outer diameter thereof gradually decreases as the curved surface extends toward the axially inner side may be formed by the bent part at the inner side of the cap connecting part in the axial direction.

The minimum outer diameter of the curved surface may be smaller than the inner diameter of the first inner circumferential surface.

Accordingly, in the process of inserting the current collector plate, forced press-fit of the cap connecting part to the first inner circumferential surface may be applied.

The first inner circumferential surface of the sidewall member, into which the first section of the outer circumferential contact surface is subjected to forced press-fit, may be located closer to the bent part in the axial direction than the second inner circumferential surface of the sidewall member.

The outer circumferential bonding surface of the cap may face the second inner circumferential surface in the radial direction.

The outer circumferential contact surface of the can connecting part may face the second inner circumferential surface in the radial direction at an axially inward side in of the outer circumferential bonding surface.

Each of the outer circumferential bonding surface of the cap and the outer circumferential contacting surface of the can connecting part of the current collector plate may be in contact with the second inner circumferential surface.

The outer diameter of the outer circumferential contact surface may correspond to or be smaller than the inner diameter of the second inner circumferential surface.

The cap may include a cap body, a thickness reduction part, and a bonding portion in sequence sequentially from the center toward a radially outer side of the cap.

**In** other words, the thickness reduction part may be provided at a radially outer side of the cap body 160, and the bonding portion may be provided at a radially outer side of the thickness reduction part.

The outer circumferential bonding surface of the cap may be provided in the bonding portion.

The first thickness may be the thickness of the bonding portion measured in the axial direction.

The first thickness may be smaller than the second thickness of the cap body measured in the axial direction.

As a result, the axial dimension of the welding area for the sidewall member, i.e., the axial dimension of the outer circumferential bonding surface is suppressed such that the welding portion is formed on the entirety of the outer circumferential bonding surface along the entire axial direction while minimizing the cap from being deformed by the inner pressure of the can by increasing the second thickness of the cap body which forms the overall shape of the cap, thereby increasing both the strength of the cap itself and the bonding strength of the cap to the sidewall member.

The thickness reduction part may be provided on the axially inner surface of the cap.

When the location where the thickness reduction part is provided is appropriately selected such that at least a portion of the thickness reduction part is in contact with the current collector plate, the effect of the alignment of the center of the cap is achieved as the thickness reduction part of the cap comes in contact with the current collector plate in the process of inserting the cap. That is, the cap is effectively aligned and centered during insertion of the cap into the can due to the presence of the thickness reduction part of the cap.

To increase such alignment effect, the thickness reduction part may include an inclined surface that extends further outward in the axial direction as the thickness reduction part extends toward the radially outer side of the cap.

The thickness reduction part and bonding portion may be formed by forging.

As the cap is inserted, the inner edge in the radial direction of the axially outer end of the cap connecting part of the current collector plate may come in contact with the inclined surface of the thickness reduction part.

Accordingly, the center of the cap and the center of the current collector plate may be aligned, and the axially outer end of the cap connecting part of the current collector plate is pressed toward the radially outer side so as to be closer to or to be brought into contact with the second inner circumferential surface of the sidewall member.

The present disclosure provides a manufacturing method of the above-described battery cell.

The battery cell includes: a can including a bottom member, a sidewall member connected to the bottom member and extending in an axial direction and an open end provided at one axial end of the sidewall member; a cap covering the open end; and an electrode assembly accommodated in the can.

The manufacturing method of a battery cell includes a first step of bonding a current collector plate to an electrode tab provided at an end corresponding to the open end among two axial ends of the electrode assembly.

The manufacturing method includes a second step of bringing a first section, which is a portion in the axial direction of the outer circumferential contact surface of the can connecting part provided at a radially outer edge of the current collector plate, with the inner circumferential surface of the sidewall member when inserting the current collector plate into the can.

Here, the can connecting part of the current collector plate is subjected to a forced press-fit into the first inner circumferential surface disposed axially inward of the inner diameter expansion part of the sidewall member such that adhesion strength of the first inner circumferential surface and the outer circumferential bonding surface of the current collector plate increases.

The manufacturing method includes a third step of bringing an outer circumferential bonding surface and a current collector plate contact surface provided at the edge of the cap into contact with the inner circumferential surface of the sidewall member and a cap contact surface of the current collector plate, respectively, while covering the open end of the sidewall member with the cap.

Here, the thickness reduction part having the form of an inclined surface provided on axially inner surface of the cap may be brought into contact with the current collector plate to align the center of the cap, or the axially outer end of the cap contact surface of the current collector plate may be pressed toward the radially outer side so as to be closer to or to be brought into contact with the second inner circumferential surface of the sidewall member.

The manufacturing method may include a fourth step of irradiating a laser to a contact area between the inner circumferential surface of the sidewall member and the outer circumferential bonding surface of the cap from the axially outer side along an axial direction to weld the inner circumferential surface of the sidewall member, the outer circumferential bonding surface of the cap and the can connecting part of the current collector together.

According to another aspect of the present disclosure, a battery cell may include a can, a cap, an electrode assembly, and a current collector plate. The can may include a sidewall member extending in an axial direction and an open end provided at a first axial end of the sidewall member. The first axial end of the sidewall member includes a first tapering portion which is radially inclined. The cap covers the open end of the can. The electrode assembly may be positioned in the can. The current collector plate electrically connects the electrode assembly and the can. A radially outer portion of the current collector plate may include a first outer contact surface defined by an outer circumference of the radially outer portion, wherein the outer contact surface faces the inner surface of the sidewall member. The radially outer portion may further include second surface defined by an axially outward-facing end of the radially outer portion of the current collector plate, wherein the second surface faces and contacts an axially inward-facing surface of the cap. The cap may include a first outer cap surface facing the inner surface of the sidewall member. The cap may further include a second axially inward-facing cap surface, wherein the second cap surface faces and contacts the second surface of the radially outer portion of the current collector plate.

Further in the above-described aspect of the present disclosure, the first outer cap surface may be disposed radially and axially outward of the second cap surface. At least a portion of the inner surface of the sidewall member and at least a portion of the outer contact surface of the current collector plate may be bonded by welding. At least a portion of the inner surface of the sidewall member and at least a portion of the first cap surface may be bonded by welding. At least a portion of the second surface of the radially outer portion of the current collector plate and at least a portion of the second cap surface may be bonded by welding. At least a portion of the inner surface of the sidewall member, at least a portion of the first cap surface, and at least a portion of the radially outer portion of the current collector plate may be welded together. An outer diameter of the current collector plate may be greater than an inner diameter of the inner surface of the sidewall member before the current collector plate is inserted into the can, causing a portion where the inner surface of the sidewall member and the outer contact surface of the radially outer portion of the current collector plate are in contact to be subjected to press-fit into the sidewall member.

Further in the above-described aspect of the present disclosure, the tapering portion of the inner surface of the sidewall member may taper radially outward as the inclined surface extends axially outward. The radially outer portion of the current collector plate may include a bent part when the current collector plate is positioned in the can and the radially outer portion may extend axially outward from the bent part. The bent part may define a curved surface curving from a radial direction toward an axial direction, and an outer diameter of the current collector plate may gradually decrease as the radially outer portion of the current collector plate extends axially inward. A minimum outer diameter of the curved surface may be smaller than an inner diameter of the inner surface of the sidewall member.

Further in the above-described aspect of the present disclosure, the cap may include a cap body, an inclined surface at a radially outer portion of the cap body, and a bonding portion provided at a radially outer side of the cap body which includes the first cap surface and the second cap surface. A first thickness of the bonding portion measured in an axial direction may be smaller than a second thickness of the cap body measured in the axial direction. The inclined surface of the cap body may be provided on an axially inner surface of the cap and may extend axially outward as the inclined surface extends radially outward. At least a portion of the inclined surface of the cap body may be in contact with the current collector plate.

Further in the above-described aspect of the present disclosure, the inner sidewall member includes a first inner circumferential surface located adjacent to the first tapering portion and defining a first inner diameter of the can and a second inner circumferential surface located adjacent to the first tapering portion and defining a second inner diameter of the can larger than the first inner diameter.

According to another aspect of the present disclosure, a method of manufacturing a battery cell according to independent claim 13 is provided and includes providing a can including a sidewall member extending in an axial direction and an open end provided at a first axial end of the sidewall member, a cap configured to cover the open end, and an electrode assembly positioned in the can; bonding a current collector plate to the electrode assembly; inserting the current collector plate into the can, wherein the step of inserting the current collector plate includes deforming a radially outer portion of the current collector plate from a first shape to a second shape; contacting a first outer cap surface and a second axially inward-facing cap surface with the inner surface of the sidewall member; contacting the second cap surface with a second surface of the radially outer portion of the current collector plate, while covering the open end of the sidewall member with the cap; and irradiating a laser from an axially outer side to a contact area of the inner surface of the sidewall member and the first cap surface to weld together the inner surface of the sidewall member, the first cap surface and the radially outer portion of the current collector plate.

Further in the above-described aspect of the present disclosure, the radially outer portion of the current collector plate may contact an inner surface of the sidewall member during the inserting step. An inclined surface on an axially inner surface of the cap may contact the current collector plate during the step of contacting the first and second cap surfaces with the inner surface of the sidewall member.

According to another aspect of the present disclosure, a battery cell may include a can, a cap, an electrode assembly and a current collector plate. The can may include a sidewall member extending in an axial direction and an open end provided at a first axial end of the sidewall member. The cap may be configured to cover the open end. The electrode assembly may be configured to be received in the can. The current collector plate may be configured to electrically connect the electrode assembly and the can. The current collector plate may define a first shape before the current collector plate is positioned within the can, and the current collector plate may define a second shape different from the first shape when the current collector plate is positioned within the can. A radially outer portion of the current collector plate may include a first outer contact surface defined by an outer circumference of the radially outer portion when the current collector plate is in the second shape. The first outer contact surface may face an inner surface of the sidewall member. A second surface may be defined by an axially outward-facing end of the radially outer portion of the current collector plate when the current collector plate is in the second shape. The second surface may face and contact an axially inward-facing surface of the cap *(e.g.,* a first cap surface) when the battery cell is assembled. The cap may include a first radially outer surface *(e.g.,* first cap surface) facing the inner surface of the sidewall member when the battery cell is assembled. The cap may further include a second axially inward-facing surface (e.g., second cap surface). The second cap surface may face and contact the second surface of the radially outer portion of the current collector plate when the battery cell is assembled.

Further in the above-described aspect of the present disclosure, the radially outer portion of the current collector plate may extend in the radial direction in the first shape and the radially outer portion of the current collector may extend in the axial direction in the second shape. The current collector plate may be configured to be elastically deformed from the first shape to the second shape during insertion of the current collector plate into the can.

### BRIEF DESCRIPTION OF DRAWINGS

FIG. 1 is a perspective view of a cylindrical battery cell according to an aspect of the present disclosure.
FIG. 2 is an exploded perspective view of the electrode assembly before it is wound and accommodated in the can of FIG. 1.
FIG. 3 is a perspective view of the electrode assembly of FIG. 2 in a laminated state before winding.
FIG. 4 is a perspective view of a cylindrical jelly-roll shaped electrode assembly assembled by winding the laminate of FIG. 3.
FIG. 5 is a perspective view illustrating a first current collector plate bonded to the electrode tabs of a first electrode of the electrode assembly of FIG. 4.
FIG. 6 is a perspective view illustrating a second current collector plate bonded to the electrode tabs of a second electrode of the electrode assembly of FIG. 4.
FIG. 7 is a side cross-sectional view illustrating a process of positioning into the can the electrode assembly to which the first and second current collector plates are bonded.
FIG. 8 is a side cross-sectional view illustrating a process of bonding of the first current collector plate and a first electrode terminal of the electrode assembly accommodated in the can.
FIG. 9 is a side cross-sectional view illustrating a process of positioning a cap so as to cover the open end of the can that has the electrode assembly accommodated therein.
FIGS. 10 and 11 are side cross-sectional views illustrating the process of closing with a stopper the liquid injection port of the cap which is bonded to the sidewall member of the can to close the open end.
FIG. 12 is an enlarged cross-sectional view of the area marked with a two-dot chain line at the open end of the battery cell in FIG. 11, illustrating the process of inserting a cap with the electrode assembly accommodated in the can and the current collector plate inserted.
FIG. 13 is a diagram illustrating a state in which the cap is inserted in FIG. 12.
FIG. 14 is an enlarged view illustrating the contact area of the sidewall member, the current collector plate, and the cap in FIG. 13.
FIG. 15 is a view illustrating a state in which a welding portion is formed by welding the sidewall member, the current collector plate, and the cap portion in FIG. 13.
FIGS. 16 and 17 are flowcharts of a manufacturing process of a battery cell according to the present disclosure, wherein FIG. 16 is a flowchart of the manufacturing process of a battery cell using a cap provided with a liquid injection port, and FIG. 17 is a flowchart of the manufacturing process of a battery cell using a cap without a liquid injection port.
FIG. 18 is a perspective view of a battery pack including a plurality of battery cells according to aspects of the disclosure.
FIG. 19 is a diagram of a car equipped with the battery pack of FIG. 18.

### DETAILED DESCRIPTION

The above-described objects, features and advantages will be described in detail hereinafter with reference to the accompanying drawings such that those skilled in the art will be able to implement the technical idea of the present disclosure. In describing the present disclosure, when it is determined that a detailed description of prior art related to the present disclosure unnecessarily obscures the gist of the present disclosure, the detailed description thereof will be omitted. Hereinafter, aspects of the present disclosure will be described in detail with reference to the accompanying drawings. In the drawings, identical reference numerals are used for indicating identical or similar components.

While "first", "second", etc. are used to describe various elements, these elements are not limited by these terms. Rather, such terms are only used to distinguish one element from another, and, unless specifically stated otherwise, a component identified as a first element may also be a second element, and vice versa.

Throughout the specification, unless stated otherwise, each element may be singular or plural.

Hereinafter, "arranging an element at an upper portion (or lower portion) of a component" or "arranging an element at a top (or bottom) of a component" refers not only to arranging the element so as to be in contact with an upper surface (or lower surface) of the component but also to arranging the element above an upper surface (or below a lower surface) with another element interposed therebetween.

Additionally, when an element is described as being "connected to," "coupled with," or "in contact with" a component, it should be understood that the element may be directly connected to, directly coupled with, or directly in contact with the component, or the element may be connected to, coupled with, or in contact with the component with one or more other elements interposed therebetween.

The expressions in singular form herein include expressions in plural form unless the context explicitly dictates otherwise.

Throughout the specification, "A and/or B" refers to A, B, or A and B unless specifically stated otherwise, and "C to D" is inclusive of both endpoints and all intervening values.

In the description of the embodiments, "axial direction" refers to the direction in which the central longitudinal axis constituting the winding center of the jelly-roll type electrode assembly extends, *i.e.,* the direction parallel to the central longitudinal axis, whereas "radial direction" refers to a direction toward (centripetal) or away (centrifugal) from the axis, and "circumferential direction" refers to a direction surrounding the axis.

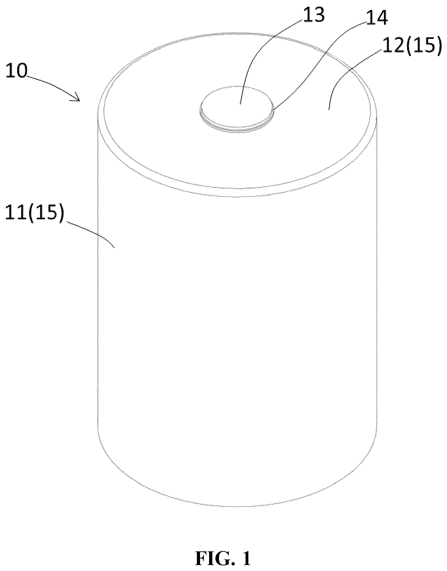

Hereinafter, an aspect of a battery cell to which a welding structure of the present disclosure is applied will be described in detail with reference to FIGS. 1 to 13.

A battery cell of this aspect of the disclosure may be, for example, a cylindrical battery cell whose form factor ratio (defined as the diameter of the cylindrical battery cell divided by the height, that is, the ratio of the diameter Φ to the height H) is greater than approximately 0.4.

The form factor refers to values representing the diameter and the height of a cylindrical battery cell. The cylindrical battery cell may be, for example, a 46110 cell, a 48750 cell, a 48110 cell, a 48800 cell or a 46800 cell. In the values representing the form factor, the first two numbers represent the diameter of the cell, the next two numbers represent the height of the cell, and the last number 0 represents that the cross-section of the cell is circular.

The battery cell may be a cell that is approximately cylindrical with a diameter of approximately 46 mm, a height of approximately 110 mm, and a form factor ratio of 0.418.

A battery cell according to another aspect may be a cell that is approximately cylindrical with a diameter of approximately 48 mm, a height of approximately 75 mm, and a form factor ratio of 0.640.

A battery cell according to yet another aspect may be a cell that is approximately cylindrical with a diameter of approximately 48 mm, a height of approximately 110 mm, and a form factor ratio of 0.418.

A battery cell according to yet another aspect may be a cell that is approximately cylindrical with a diameter of approximately 48 mm, a height of approximately 80 mm, and a form factor ratio of 0.600.

A battery cell according to another aspect may be a cell that is approximately cylindrical with a diameter of approximately 46 mm, a height of approximately 80 mm and a form factor ratio of 0.575.

The present disclosure may be applied in the context of battery cells with a form factor ratio of approximately 0.4 or less, for example, 18650 cells, 21700 cells, etc. For an 18650 cell, its diameter is approximately 18 mm, its height is approximately 65 mm, and the form factor ratio is 0.277. For a 21700 cell, its diameter is approximately 21 mm, its height is approximately 70 mm, and the form factor ratio is 0.300.

The battery cell of the present disclosure includes an electrode assembly 20, first and second current collector plates 31 and 32 electrically connected to the electrode assembly 20, and a can 10 accommodating the electrode assembly 20 and the current collector plates 31 and 32 therein.

The can 10 includes a bottom member 12, a sidewall member 11 connected to the bottom member 12 and extending in an axial direction, and an open end provided at one axial end of the sidewall member 11.

The can 10 includes a cap 16 covering the open end.

The bottom member 12 may have a disk shape with a hole provided in the center thereof, and the sidewall member 11 may have a circular tubular shape that circumscribes an internal volume of the can 10.

The bottom member 12 and the sidewall member 11 may be manufactured by performing a deep drawing process on a metal sheet having a nickel-plated steel surface (although the material is not limited thereto), and then trimming the sidewall member 11 with a punch while holding the front end of the sidewall member with a blank holder.

A first electrode terminal 13 may be fitted into and coupled to the hole. The first electrode terminal 13 may be riveted and fixed to the bottom member 12 with a gasket 14 interposed therebetween. Specifically, the gasket 14 is interposed between the first electrode terminal 13 and the bottom member 12 to seal the inside and outside of the can 10 thereby preventing electrolyte leakage, and electrically insulate the first electrode terminal 13 from the bottom member 12.

However, the connection method between the first electrode terminal 13 and the bottom member 12 is not limited thereto. For example, if the resulting structures are capable of creating a seal between the first electrode terminal 13 and the bottom member 12 and also electrically insulating the first electrode terminal 13 from the bottom member 12, then various other fixing methods may be used, such as a bolt-and-nut coupling method, a glass seal method, and PP-MAH (maleic anhydride grafted polypropylene or maleated polypropylene) to a chrome coating heat bonding method.

The first electrode terminal 13 may have a first polarity, and the can 10 may have a second polarity. That is, the bottom member 12 of the can 10, the sidewall member 11 connected thereto, and the cap 16, which are described below in further detail, connected to the sidewall member 11 may all have the second polarity.

Accordingly, the battery cell may have both the first electrode terminal 13 and the second electrode terminal 15 disposed at the axial end where the bottom member 12 is provided, e.g., at the closed end of the can 10. As a result, the battery cell may have a busbar connected to the first electrode terminal 13 and another busbar connected to the second electrode terminal 15, with both busbars being located at the top of the battery cell.

In one example, the first electrode terminal 13 may be a cathode terminal, and the second electrode terminal 15 may be an anode terminal. In other examples, the first electrode terminal 13 may be an anode terminal, and the second electrode terminal may be a cathode terminal.

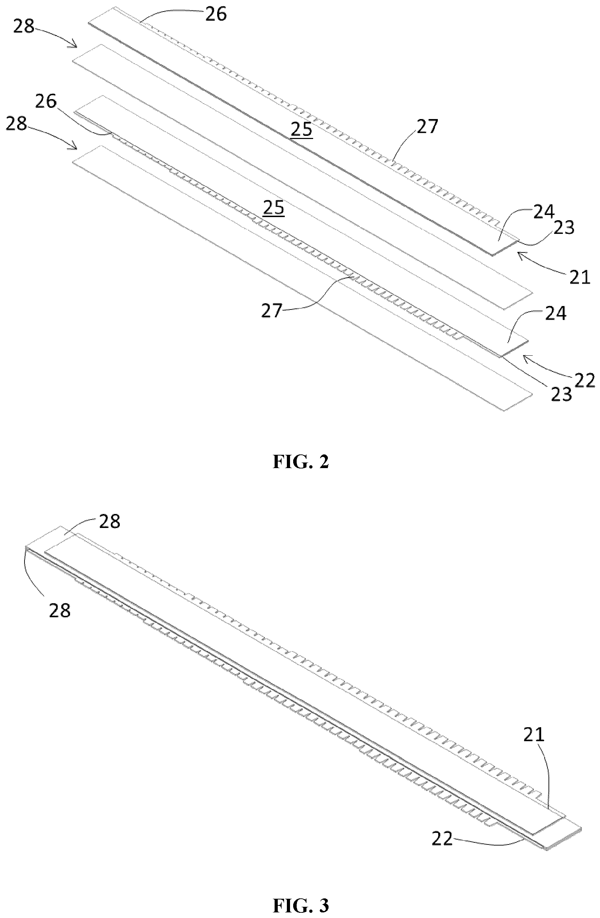

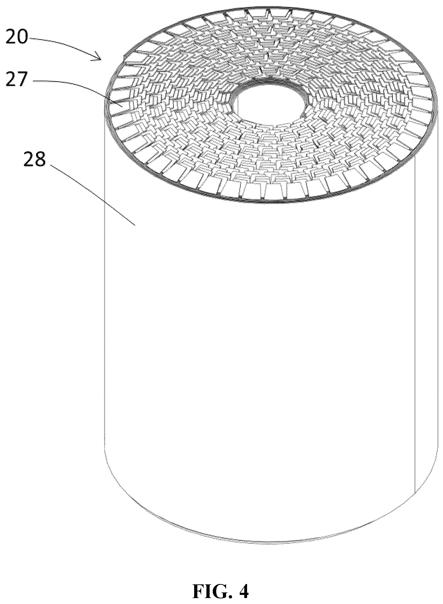

The electrode assembly 20 is accommodated or received within the internal volume of the can 10. The electrode assembly 20 is manufactured by preparing a first electrode 21, a second electrode 22 and separators 28 extending in a lengthwise direction with a predetermined width as shown in FIG. 2, and then forming a laminate by sequentially stacking the first electrode 21, the separator 28, the second electrode 22, and the separator 28, as shown in FIG. 3, after which the laminate is coiled to have a shape of a jelly-roll wound around the core axis as shown in FIG. 4.

In some examples, the first electrode 21 may be a cathode, and the second electrode 22 may be an anode. In other examples, the first electrode 21 may be an anode, and the second electrode 22 may be a cathode.

The first electrode 21 and the second electrode 22 are manufactured in the form of a sheet. The electrode sheet is manufactured by applying an active material layer 24 to the surface of a metal foil 23. The electrode sheet includes a coated area 25 where the active material layer 24 is applied and a non-coated area 26 where the active material layer 24 is not applied. The cathode sheet is provided with a non-coated area 26 on one side in the widthwise direction, and the anode sheet is provided with a non-coated area 26 on the other side in the widthwise direction.

The first electrode 21 and the second electrode 22 are arranged in the laminate such that their non-coated areas 26 are exposed or protruding from the laminate in the widthwise direction, with the non-coated area 26 of the first electrode 21 protruding at one axial end of the wound jelly-roll and the non-coated area 26 of the second electrode 22 protruding at the opposite axial end of the jelly-roll. The non-coated area 26 itself functions as at least one electrode tab 27.

Notches may be formed at predetermined intervals along the non-coated area 26 so as to define notches in the electrode tabs 27. The electrode tabs 27 may also be referred to herein as notched tabs 27.

The notched tabs 27 may each be shaped in the form of a flag. In the illustrated aspect, the notched tabs 27 have the shape of an equilateral trapezoid. However, it is contemplated the notched tabs 27 may alternatively be formed in various shapes such as semicircular, semielliptical, triangular, rectangular, parallelogram, etc. Additionally, in the illustrated aspect, the notched tabs 27 each have the same width along the lengthwise direction. However, it is also contemplated that the width of the notched tabs along the lengthwise direction may gradually widen from the core side to the outer circumferential side.

In addition, as illustrated in FIGS. 2 and 3, the height of the notched tabs 27 gradually increases from the core side to the outer circumferential side. However, it is also contemplated that the height of the notched tabs may be constant or may gradually decrease.

In addition, according to the illustrated aspect, the notched tabs 27 may be removed or absent from the non-coated area 26 at both opposing ends of the first and second electrodes 21, 22 in the lengthwise direction. However, it is also contemplated that the notched tabs may not be removed from either end, or they may only be removed from the non-coated area at the radially inner end or the radially outer end when the electrode assembly 20 is wound into the jelly-roll configuration.

In the jelly-roll shaped electrode assembly 20, the notched tabs 27 may be bent in a radial direction and flattened, as shown in FIG. 4. That is, the notched tabs 27 may be bent inward or outward in the radial direction. Although, according to aspects of the disclosure, the notched tabs 27 are bent inward in the radial direction as shown.

The notched tabs 27 may be bent one by one in the process of winding the laminate to form the jelly-roll shaped electrode assembly 20. Alternatively, the notched tabs 27 may be formed by bending the notched tabs all at once after the laminate has been wound to form the jelly-roll shaped electrode assembly.

The notched tabs 27 of the first electrode 21 and the notched tabs 27 of the second electrode 22, which are bent and overlap with one another in the radial direction, may define or form a plane substantially perpendicular to the axial direction at each of the opposing ends of the electrode assembly 20.

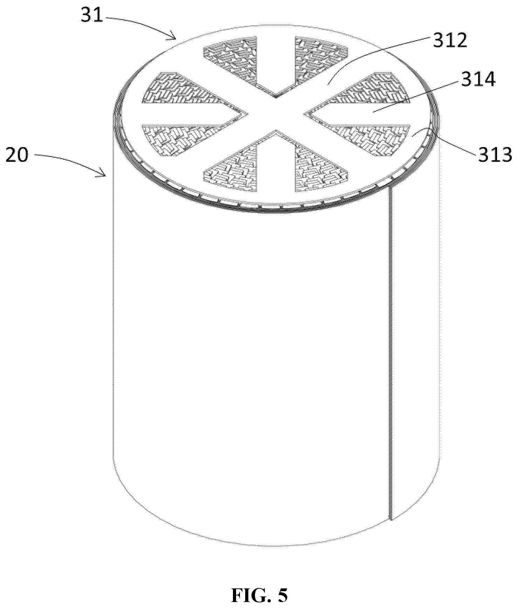

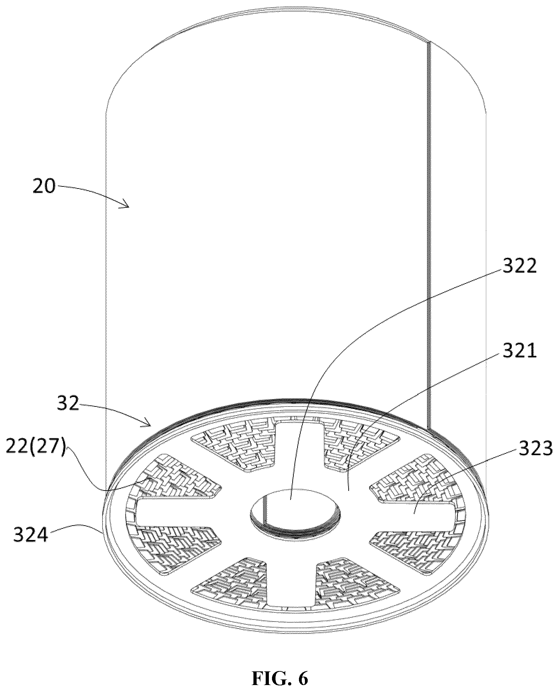

A first current collector plate 31 and a second current collector plate may be bonded to the substantially flat surface formed by the bent notched tabs 27 exposed at the two axial ends of the electrode assembly 20, as shown in FIGS. 5 and 6.

In some examples, the first current collector plate 31 is a cathode current collector plate, and the second current collector plate 32 is an anode current collector plate. The first current collector plate 31 may be made of aluminum, and the second current collector plate 32 may be made of copper. The current collector plates 31 and 32 may be manufactured by punching, trimming, piercing, and/or bending a metal sheet.

Referring to FIG. 5, the first current collector plate 31 includes a terminal connecting part 312 extending from the center in the radial direction, a ring part 313 connecting the radially outer end of the terminal connecting part 312 and extending in the circumferential direction, and an electrode connecting part 314 extending radially inwardly from the ring part 313 without being connected to the terminal connecting part 312. The center of the terminal connecting part 312 covers at least a portion of the core hollow portion along the central longitudinal axis of the electrode assembly 20. The terminal connecting part 312 generally forms an X-shape connecting with ring part 313 at four connection points which are approximately equidistant from each other around the inner circumference of the ring part 313. It is contemplated that the terminal connecting part 312 may form other shapes and extend in other formations along the first current collector plate 31.

The electrode connecting part 314 is bonded to the notched tabs 27 of the first electrode 21 of the electrode assembly 20 using a method such as laser welding before the electrode assembly 20 is inserted into the can 10. The welding line of the laser may extend radially.

Referring to FIG. 6, the second current collector plate 32 defines a hole 322 corresponding to the core hollow portion of the electrode assembly 20. The second current collector plate 32 includes an inner ring part 321 surrounding the core hollow portion and an electrode tab connecting part 323 extending radially from the inner ring part 321. The electrode tab connecting part 323 may be in the form of a plurality of spokes extending radially outwardly from the inner ring part, where one or more of the spokes have radially outer ends connected to a peripheral portion of the current collector plate 32 referred to as a can connecting part 324. Moreover, one or more of the spokes of the electrode tab connecting part 323 may have radially outer ends that do not reach the can connecting part 324. The can connecting part 324 has an outer ring shape encircling the electrode tab connecting part 323, and the can connecting part 324 may include a step away from the electrode assembly 20 in the axial direction, such that at least an outermost periphery of the can connecting part 324 is spaced further away from the electrode assembly 20 than the other portions of the can connecting part 324, including the electrode tab connecting part 323 and the inner ring part 321.

The electrode tab connecting part 323 is bonded to the notched tabs 27 of the second electrode 22 of the electrode assembly 20 by laser welding, etc., before the electrode assembly 20 is inserted into the can 10. The welding line of the laser may extend radially.

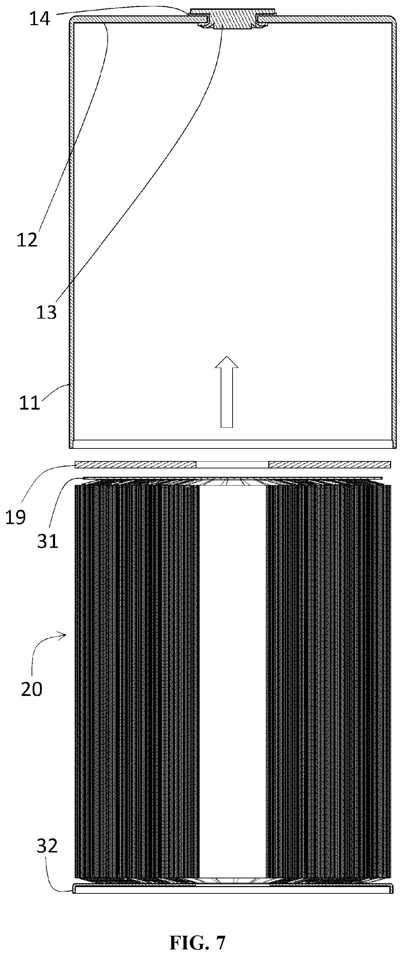

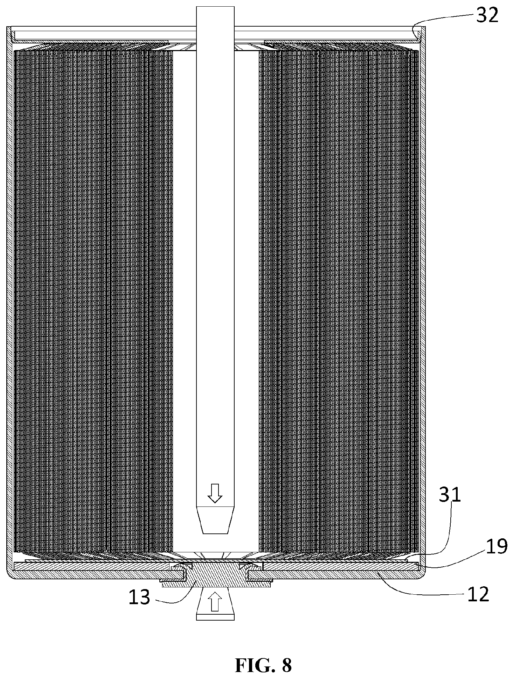

As shown in FIGS. 7 and 8, the electrode assembly 20 is accommodated in the can 10 with the first current collector plate 31 oriented to face the bottom member 12 of the can 10. An insulator 19 is interposed between the first current collector plate 31 and the bottom member 12 of the can 10 to electrically insulate the first current collector plate 31 from the bottom member 12. The terminal connecting part 312 of the first current collector plate 31 is bonded to the first electrode terminal 13 by resistance welding, ultrasonic welding, laser welding, or the like. A welding device for welding the first current collector plate 31 and the first electrode terminal 13 may perform welding by accessing the inner side of the center of the terminal connecting part 312 of the first current collector plate 31 *(i.e.,* the side of the terminal connecting part 312 facing the electrode assembly 20). Specifically, the welding device may access that location of the first current collector plate 31 from the open end of the can 10 through the core hollow part of the electrode assembly 20, as shown in FIG. 8. As an alternative to the above-described welding method, the first current collector plate 31 and the first electrode terminal 13 may be bonded to one another by brazing or soldering. That is, various bonding methods may be utilized, as long as the first current collector plate 31 and the first electrode terminal 13 are both fixed to and electrically connected to each other.

With the electrode assembly 20 accommodated inside the can 10, the electrode tab 27 of the second electrode 22 and the second current collector plate 32 will be arranged to face the open end of the sidewall member 11.

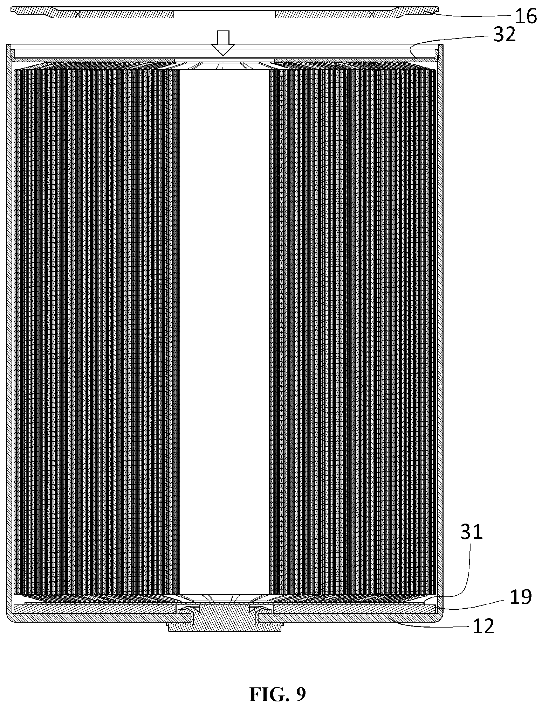

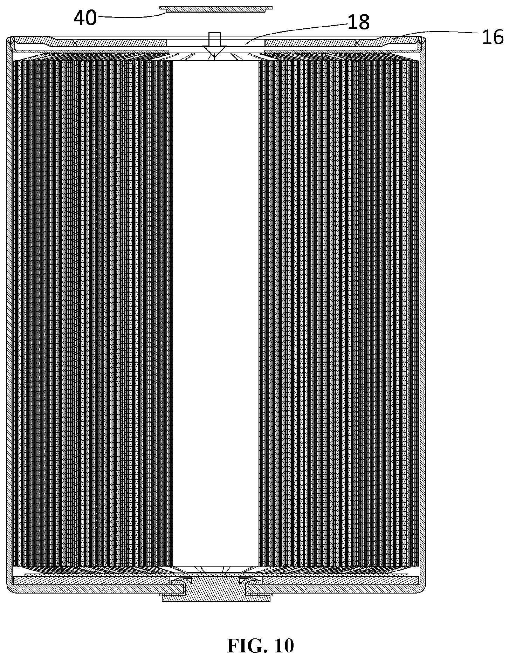

After the first current collector plate 31 and the first electrode terminal 13 are bonded, the open end of the sidewall member 11 is covered and closed with the cap 16 as shown in FIGS. 9 and 10. Thereafter, the electrolyte solution may be injected into the can 10 through a liquid injection port provided at the center of the cap 16.

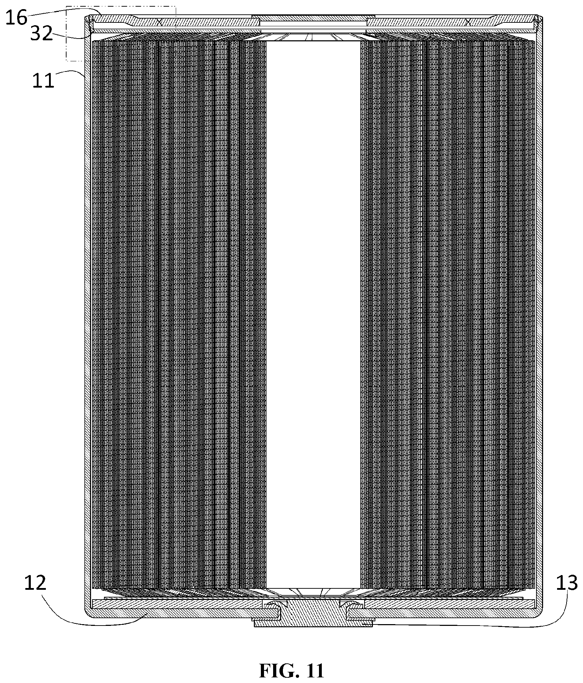

After injecting the electrolyte, as shown in FIGS. 10 and 11, the liquid injection port 18 may be closed by a stopper 40.

In other examples, the welding methodology of the present disclosure may be applied to a cap without a liquid injection port. In such examples, the electrolyte solution may be injected first before covering the open end of the sidewall member 11 with the cap 16, and the open end may be covered with the cap 16 after the injection of the electrolyte solution is completed.

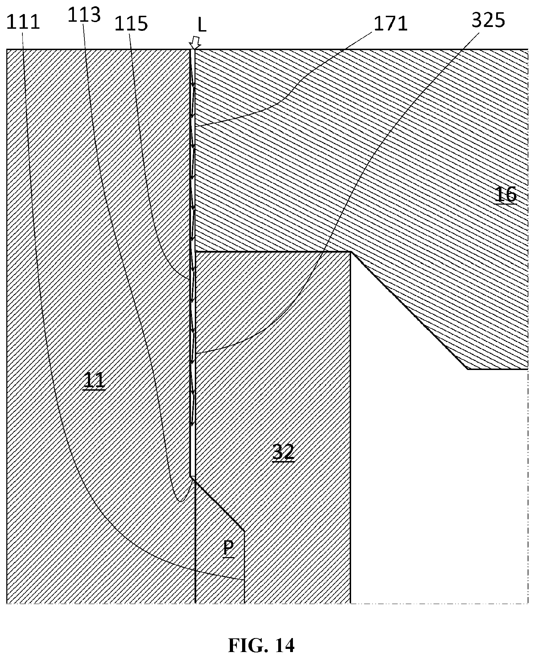

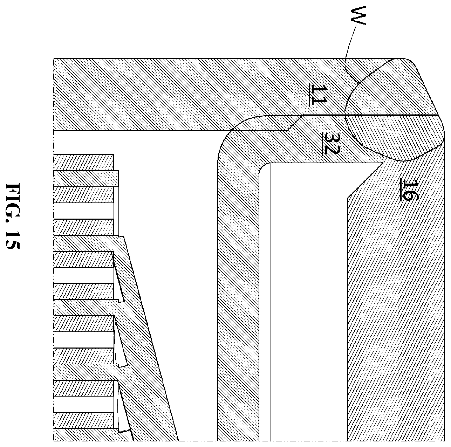

As shown in FIG. 14, the edge of the cap 16 is bonded to the edge of the sidewall member 11 by seam welding with a laser, which thereby seals the can 10. The can 10 is thus shown in the welded state in FIG. 15, wherein the sidewall member 11, the second current collector plate 32, and the cap 16 are welded together.

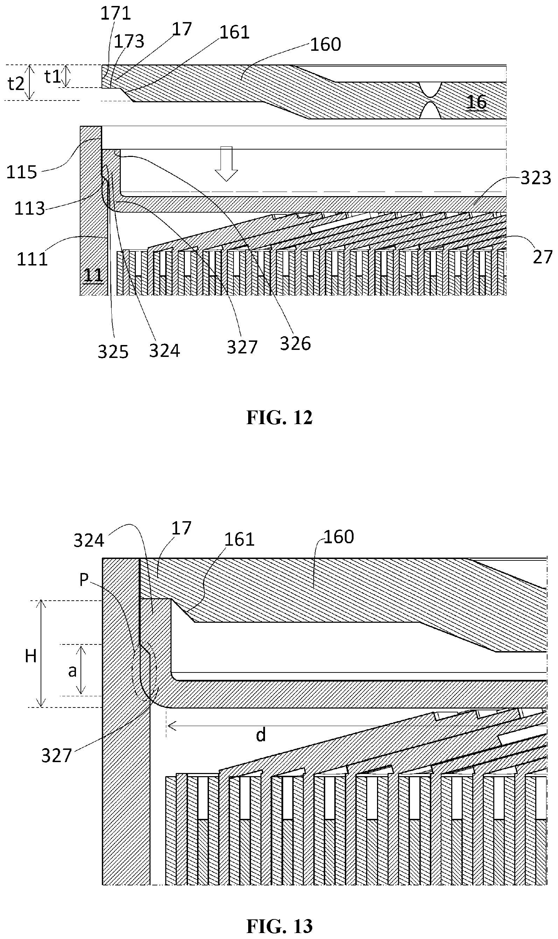

Referring to FIGS. 12 and 13, an inner diameter expansion part 113 is provided at the open end of the sidewall member 11. The inner diameter expansion part 113 includes an inclined surface provided on the radially inner surface of the sidewall member 11, such that the inner diameter of the sidewall member 11 increases as the sidewall member 11 extends toward the axially outer side. That is, the inner diameter expansion part 113 is provided on the inner surface of the sidewall member 11 and has an inclined surface extending further outward in the radial direction as the inner diameter expansion part 113 extends toward the axially outer side of the sidewall member 11. Put another way, the sidewall member 11 has a first thickness at the second inner surface 115, the thickness tapers along the inner diameter expansion part 113 as the sidewall member 11 extends axially outward from the second inner surface 115, and the sidewall member has a second thickness at the first inner surface 111 which is less than the first thickness at the second inner surface 115 as shown in FIGS. 12-15. The first inner surface 111 is adjacent to the inner diameter expansion part 113 such that an axially outer end of the inner diameter expansion part 113 is connected to an axially inner end of the first inner surface 111. Furthermore, the second inner surface 115 is adjacent to the inner diameter expansion part 113 (on a side of the inner diameter expansion part opposite the first inner surface 111) such that an axially inner end of the inner diameter expansion part 113 is connected to an axially outer end of the second inner surface 115. As such, the inner surface of the sidewall member 11 transitions sequentially from the first inner surface 111 to the inner diameter expansion part 113 to the second inner surface 115 as the sidewall member 11 member extends axially inward.

Accordingly, the radially inner surface of the sidewall member 11 may include a first inner surface 111 positioned axially inward(i.e., below or further from the opening at the open end of the sidewall member 11 relative to) the inner diameter expansion part 113, and a second inner surface 115 positioned axially outward *(i.e.,* above or closer to the opening at the open end of the sidewall member 11 relative to) the inner diameter expansion part 113.

While the diameter of the outer circumferential surface of the sidewall member 11 is uniform along the axial direction, the second inner surface 115 has an inner diameter larger than the first inner surface 111. Accordingly, the thickness of the sidewall member 11 measured in the radial direction at the portion where the second inner surface 115 is located is smaller than the thickness measured in the radial direction at the portion where the first inner surface 111 is located.

The can connecting part 324 provided at the edge of the second current collector plate 32 and electrically connected to the can 10 includes a first portion that faces or is in contact with the inner surfaces 111, 113 and 115 of the sidewall member 11. In the first portion *(i.e.,* at a radially outer portion of the current collector plate 32) is an outer circumferential contact surface 325 that faces or is in contact with the inner surfaces 111, 113 and 115 of the sidewall member 11 in the radial direction.

The can connecting part 324 (which will also be referred to herein as the radially outer portion of the current collector plate 32) includes an outer surface configured to contact the cap 16 when the cap is assembled to the can 10. The outer surface, also referred to as the cap contact surface 326, faces and is in contact with the inner surface of the cap 16 in the axial direction *(i.e.,* the underside of the cap 16) when the cap is assembled to the can 10.

The second current collector plate 32 includes the bent part 327. The bent part 327 is where the current collector plate 32, while extending outward in the radial direction, is bent outward in the axial direction. The can connecting part 324 *(e.g,,* the radially outer portion) of the second current collector plate 32 is connected to the electrode tab connecting part 323 through the bent part 327 and the inner ring part 321 described above.

The can connecting part 324 is connected to the axially outer side of the bent part 327, and has a shape extending outward in the axial direction from the first bent part 327. Accordingly, the area and the axial length of the outer circumferential contact surface 325 of the second current collector plate 32 may be further secured with the can 10. It should be noted that the can connecting part 324 is described as being positioned axially outward relative to the bent part 327 because it is shown as such in FIGS. 12 and 13, which illustrates the configuration of the current collector plate 32 after being inserted into the can 10. The current collector plate 32 is, however, elastically deformable, and the bent part 327 may therefore be formed after the current collector plate 32 is inserted into the can 10. For example, the current collector plate 32 may elastically deform up to an angle of about 90 degrees relative to the horizontal plane along which the radially inner portion of the current collector plate extends. In some examples, the bent part 327 may form an angle between about 70 to 85 degrees relative to the horizontal plane due to contact with the inclined inner surface of the sidewall member 11. It is contemplated that the current collector plate 32 may extend along a single plane across its entire diameter prior to insertion into the can 10. It is also contemplated that prior to insertion of the current collector plate 32 into the can 10, the bent part 327 may still be present but at a lesser angle than shown in FIGS. 12 and 13. Accordingly, the cap contact surface 326 may be referred to as a radially outer surface of the current collector plate 32 because it may generally face in a radially outward direction prior to the current collector plate's insertion into the can 10. Furthermore, the outer circumferential contact surface 325 of the current collector plate 32 may face axially inward prior to insertion of the current collector plate's insertion into the can 10 rather than facing radially outward as shown in FIGS. 12 and 13.

The material of the second current collector plate 32 may be softer than that of the sidewall member 11. The thermal conductivity of the second current collector plate 32 may be higher than the thermal conductivity of the sidewall member 11.

For example, the material of the second current collector plate 32 may include copper, and the material of the sidewall member 11 may include iron.

The outer diameter of the outer circumferential contact surface 325 of the can connecting part 324 is larger than the inner diameter of the first inner surface 111. The outer diameter of the outer circumferential contact surface 325 may correspond to *(e.g.,* may be approximately equal to or may be smaller than) the inner diameter of the second inner surface 115.

Accordingly, the bent part 327 is elastically deformed in the process of inserting the second current collector plate 32 into the open end of the sidewall member11. Accordingly, the outer circumferential contact surface 325 is subjected to forced press-fit into the second inner surface 115 such that the outer circumferential contact surface 325 is brought into close contact with the second inner surface 115 in the radial direction. As a result, the outer diameter of the first section of the outer circumferential contact surface 325 press-fitted into the first inner surface 111 in the axial direction corresponds to the inner diameter of the first inner surface 111.

In this way, due to the multi-stage inner surface structure of the sidewall member 11 and the structure of the can connecting part 324 of the current collector plate 32, at least a section in the axial direction of the outer circumferential contact surface 325 is reliably in close contact with the radially inner surface of the sidewall member 11.

The bent part 327 provides a curved surface where the outer diameter of the bent part 327 gradually decreases relative to the outer diameter of the can connecting part 324 closer to the axially inner side of the bent part 327. In addition, the minimum outer diameter d of the curved surface measured at the lower end of the second current collector plate 32 may be smaller than the inner diameter of the first inner surface 111. Such shape guides the can connecting part 324 to be subjected to forced press-fit into the first inner surface 111 during the process of inserting the second current collector plate 32 into the inner space of the sidewall member 11. Therefore, the forced press-fit process of the second current collector plate 32 may be performed more effectively.

Ultimately, according to the present disclosure, despite the dimensional tolerance of the parts, as long as the size relationship is maintained wherein the minimum outer diameter d of the bent part 327 is smaller than the inner diameter of the first inner surface 111 of the sidewall member 11, and the outer diameter of the outer circumferential bonding surface 171 of the cap 16 is larger than the inner diameter of the first inner surface 111, the effect of ensuring that the radially outer portion of the current collector plate 32 including the outer circumferential contact surface 325 being in close contact with the first inner surface 111 of the sidewall member 11 is achieved.

Accordingly, according to the present disclosure, even when a portion of the laser L penetrates inside as shown in FIG. 14 during the welding process described further below, the laser L is prevented from directly irradiating into the can 10 by the can connecting part 324 of the second current collector plate 32 elongated in the axial direction, a forced press-fit part P through forced press-fit between the first inner surface 111 of the sidewall member 11 and the first section of the outer circumferential contact surface 325 of the second current collector plate 32 and the inner diameter expansion part 113 of the sidewall member 11.

The cap 16 includes, sequentially from the center towards the outer side in the radial direction: a cap body 160, a thickness reduction part 161 (where the thickness of the cap changes), and a bonding portion 17. That is, the cap body 160 is centered in a central region of the cap 16 and the thickness reduction part 161 is provided radially outward of the cap body 160, and the bonding portion 17 is provided radially outward of the thickness reduction part 161 so as to define an annular region of the cap 16 having a reduced thickness relative to the cap body 160. That is, a first thickness t1 of the bonding portion 17 measured in the axial direction is smaller than a second thickness t2 of the cap body 160 measured in the axial direction.

An outer circumferential bonding surface 171 (also referred to herein as a first outer surface of the cap 16) that faces in proximity or is in contact with the second inner surface 115 of the sidewall member 11 in the radial direction is provided along a radially outer surface of the cap 16, and specifically along the radially outer surface of the bonding portion 17. In addition, the underside of the cap 16 along the bonding portion 17 includes a current collector plate contact surface 173 (also referred to herein as a second axially inward-facing surface of the cap 16) facing downwardly in the axial direction so as to contact the cap contact surface 326 (also referred to as a second surface of the radially outer portion of the current collector plate 32) of the can connecting part 324 of the second current collector plate 32.

The location of the thickness reduction part 161 is selected such that at least a portion of the thickness reduction part 161 contacts the second current collector plate 32. Such contact beneficially results in the center of the cap 16 being effectively aligned as the thickness reduction part 161 of the cap 16 comes in contact with the second current collector plate 32 in the process of inserting the cap 16 into the open end of the sidewall member 11. In the illustrated aspect, in order to increase the alignment effect, the thickness reduction part 161 is implemented in the form of an inclined surface extending further outward in the axial direction as the cap 16 extends radially outward. That is, thickness reduction part 161 is defined by an inclined surface along which the thickness of the cap 16 when measured in the axial direction is reduced. As such, the axially inward-facing surface of the cap body 160 extends along a first plane, and the current collector plate contact surface 173 of the cap 16 (also known as the second axially inward-facing surface of the cap 16) extends along a second plane which may be substantially parallel to the first plane and is positioned axially outward relative to the first plane due to the inclined surface between the axially inner surface of the cap body 160 and the current collector plate contact surface 173 of the cap 16.

In the process of inserting the cap 16 into the sidewall member 11, the thickness reduction part 161 having the inclined surface may come in contact with the inner edge in the radial direction of the cap contact surface 326. Accordingly, the axially outer end of the can connecting part 324 of the second current collector plate 32 including the cap contact surface 326 is pressed toward the outer side in the radial direction by the thickness reduction part 161 such that the axially outer end of the can connecting part 324 is arranged closer to or brought into closer contact with the second inner surface 115 of the sidewall member 11.

That is, the thickness reduction part 161 in the form of an inclined surface comes in contact with the can connecting part 324 of the second current collector plate 32 in the process of inserting the cap 16 into the open end of the sidewall member 11, and not only can guide the center alignment of the cap 16 with respect to the center of the second current collector plate 32, but also presses the axially outer end of the can connecting part 324 of the second current collector plate 32 toward the radially outer side such that the axially outer end of the can connecting part 324 of the second current collector plate 32 comes in close contact with, and may even tightly abut, the second inner surface 115 of the sidewall member 11. This combination of forces created by the shapes of each component forms a tight press-fit creating a secure enclosure of the elements contained within the battery.

With the cap 16 inserted into the open end of the sidewall member 11, each of the outer circumferential bonding surface 171 of the cap 16 and the outer circumferential bonding surface 171 of the second current collector plate 32 faces or is in close contact with the second inner surface 115 of the sidewall member 11 in the radial direction. In other words, the outer circumferential bonding surface 171 of the cap 16 may face or be in contact with the second inner surface 115 in the radial direction, and the outer circumferential contact surface 325 of the can connecting part 324 may face or be in contact with the second inner surface 115 in the radial direction at a portion of the second inner surface 115 axially inward/below the portion of the second inner surface 115 that the outer circumferential bonding surface 171 abuts or faces.

In addition, in the axial direction, the cap contact surface 326 provided on the axially outer end surface of the can connecting part 324 of the second current collector plate 32 is in contact with the current collector plate contact surface 173 provided on the inner surface of the bonding portion 17 of the cap 16.

According to such assembly structure, the insertion depth of the cap 16 may be precisely regulated by the height H of the second current collector plate 32, which may be influenced by the axial extension length of the can connecting part 324.

Meanwhile, even when the outer circumferential bonding surface 171 of the cap 16 and the outer circumferential contact surface 325 of the second current collector plate 32 are not in close contact with the second inner surface 115 of the sidewall member 11 due to possible error in the dimension of the outer diameter of the outer circumferential bonding surface 171 of the cap 16, the dimension of the inner diameter of the second inner surface 115 of the sidewall member 11, and/or the dimension of the outer circumferential dimension of the second current collector plate 32, there is risk of the welding laser L penetrating into the can 10 due to the structures of the forced press-fit part P and the inner diameter expansion part 113.

A welding portion W is formed along the contact area between the sidewall member 11, the second current collector plate 32, and the cap 16, specifically where the second inner surface 115 of the sidewall member 11, the outer circumferential bonding surface 171 of the cap 16, and the can connecting part 324 of the second current collector plate 32 are welded together.

As shown, the upper axial ends of the outer circumferential bonding surface 171 of the cap 16 and the radially inner surface of the sidewall member 11, which are in contact with each other in the radial direction, are exposed along the outside of the battery cell.

The welding portion W is formed by a laser irradiated from outside of the battery cell in the axial direction and oriented toward the axial ends of the outer circumferential bonding surface 171 of the cap 16 and the second inner surface 115 of the sidewall member 11.

Since the outer circumferential contact surface 325 of the second current collector plate 32 is disposed axially inward/below the cap 16 and is in contact with the radially inner surface of the sidewall member 11, it is possible to prevent the laser from irradiating into the internal volume of the can through any gap that might be present between the sidewall member 11 and the cap 16. In addition, the inner diameter expansion part 113 of the sidewall member 11 also prevents the laser from irradiating and penetrating through a gap between the sidewall member 11 and the cap 16 or between the sidewall member 11 and the second current collector plate 32.

The welding portion W includes: a portion where at least a portion of the radially inner surface of the sidewall member 11 and at least a portion of the outer circumferential contact surface 325 of the current collector plate 32 are bonded; a portion where at least a portion of the radially inner surface of the sidewall member 11 and at least a portion of a portion of the outer circumferential bonding surface 171 of the cap 16 are bonded; and a portion where at least a portion of the cap contact surface 326 of the current collector plate 32 and at least a portion of the current collector plate contact surface 173 of the cap 16 are bonded.

That is, the welding portion W may be formed by triple welding.

The contact area of the sidewall member 11 and the cap 16 is heated to a high temperature by the laser L irradiated to form the welding portion W.

Thus, the heat generated in the sidewall member 11 by the laser may be dispersed and conducted relatively quickly through the second current collector plate 32 with a larger contact area, and the heat generated in the cap 16 by the laser may be dispersed and conducted relatively slowly through the second current collector plate 32 with a smaller contact area. Accordingly, the melting time of the sidewall member 11, which is relatively thinner than the bonding portion 17 of the cap 16, may be further delayed.

In addition, since a portion of the welding heat transmitted through the sidewall member 11 is dispersed through the second current collector plate 32, the phenomenon of heat being transferred to the separator 28 of the electrode assembly 20, which is in contact with the first inner surface 111 of the sidewall member 11, may be further reduced.

Meanwhile, as described above, in the cap 16, the first thickness t1 of the bonding portion 17 is smaller than the second thickness t2 of the cap body 160 measured in the axial direction. Accordingly, the depth at which the cap 16 must be welded to the sidewall member 11 is determined by the first thickness t1, and resistance to the bulging phenomenon of the cap 16 caused by an increase in the inner pressure of the can 10 due to thermal runaway of the battery cell, etc. is determined by the second thickness t2.

According to the present disclosure, even when welding between the cap 16 and the sidewall member 11 is performed to the first thickness t1, the contact area of the cap 16 and the sidewall member 11 *(i.e.,* where the cap 16 contacts the sidewall member 11) is completely bonded, thereby preventing bulging in the area where stress is concentrated while providing greater bulging resistance due to the cap body 160 having a greater second thickness t2 than the thickness t1 at a radially outer portion of the cap 16.

In addition, according to the present disclosure, the thickness reduction part 161 of the cap 16 for interaction with the can connecting part 324 during the assembly process is disposed at a location radially inward of the outer circumferential bonding surface 171 by a distance approximately corresponding to the thickness of the can connecting part 324 in the radial direction such that the area of the cap body 160 having the second thickness t2 may be secured more widely, thereby increasing the resistance to bulging. Typically, since a current collector plate such as the second current collector plate 32 is manufactured by pressing a thin metal sheet with a press, it should be understood that the thickness reduction part 161 may be disposed very close to the radially outer edge of the cap 16.

According to the various above-described aspects, despite the wide range of welding processes, sealing force may be secured without perforation or liquid leakage, and welding performance may be improved. In addition, process stability may be increased by preventing thermal damage to cell components or separators caused by welding heat, and durability may also be increased by obtaining dimensional stability and bulging resistance by suppressing dimensional deformation due to inner pressure.

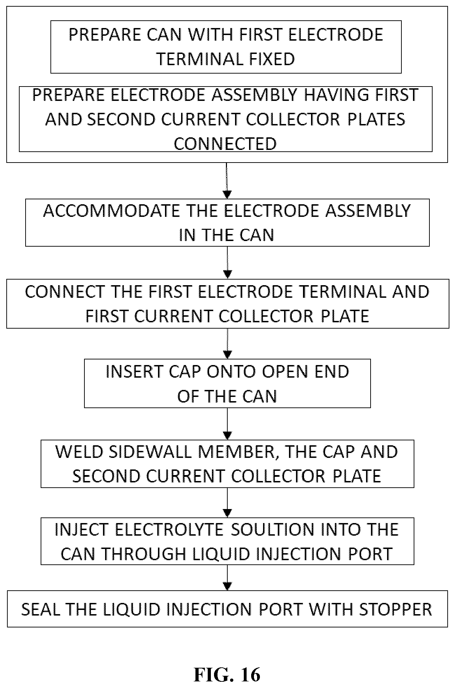

Hereinafter, with reference to FIGS. 7 to 11 and 16, a first aspect of a manufacturing method of the above-described battery cell will be described.

According to the manufacturing method of the battery cell, the can 10 with the first electrode terminal 13 fixed to the bottom member 12 is prepared, and then the electrode assembly 20 having two axially opposing ends bonded to the first current collector plate 31 and the second current collector plate, respectively, is prepared.

Thereafter, the electrode assembly 20 is positioned into the can 10 with the first current collector plate 31 facing the bottom member 12. As a result, the second current collector plate 32 is located at the open end side of the can 10. In the process of positioning the electrode assembly 20 in the can 10, the outer circumferential contact surface 325 of the can connecting part 324 provided at the radially outer edge of the second current collector plate 32 is brought into contact with second inner surface 115 of the sidewall member 11.

Next, the first current collector plate 31 and the first electrode terminal 13 are bonded.

In addition, the outer circumferential bonding surface 171 and the current collector plate contact surface 173 provided at the edge of the cap 16 are brought into contact with the second inner surface 115 of the sidewall member 11 and the cap contact surface 326 of the second current collector plate 32, respectively, while covering the open end of the sidewall member 11 with the cap 16.

Here, the thickness reduction part 161 defining an inclined surface provided on axially inner surface of the cap 16 as described above may be brought into contact with the second current collector plate 32 to align the center of the cap 16 with a center of the battery cell, and the axially outer end of the can connecting part 324 may be pressed against the radially outer side of the can 10 to be brought into contact with the second inner surface 115. That is, after the current collector plate 32 is inserted into the can 10, the radially outer portion of the current collector plate 32 *(e.g.,* the can connecting part 324) is elastically deformed to bend toward the axial direction, and the outer portion of the can connecting part 324 may extend at an angle slightly less than 90 degrees relative to the horizontal plane along which the inner portion of the current collector plate extends. The angle of the can connecting part 324 may be slightly less than 90 degrees due to the ramped surface of the radially inner surface of the sidewall member 11.

Thereafter, a laser is irradiated on the contact area between the second inner surface 115 of the sidewall member 11 and the outer circumferential bonding surface 171 of the cap 16 from an axially outer side along the axial direction to triple weld the radially inner surface of the sidewall member 11, the bonding portion 17 of the cap 16, and the can connecting part 324 of the second current collector plate 32 together. Accordingly, the welding portion W bonds all of the sidewall member 11, the cap 16, and the second current collector plate 32.

Next, the electrolyte solution is injected into the can 10 through the liquid injection port 18 of the cap 16. After completing the electrolyte injection, the liquid injection port 18 is sealed with a stopper 40. The liquid injection port 18 may be sealed by, for example, welding. However, the sealing may be achieved by applying various known technologies capable of sealing by bonding.

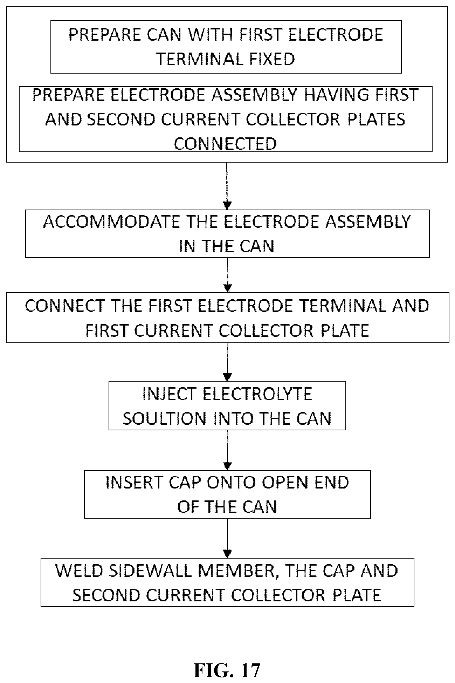

Referring to FIG. 17, a second aspect of the battery cell manufacturing method will be described. The manufacturing method of the second aspect may be applied when a cap without a liquid injection port is used.

First, a can 10 is prepared with a first electrode terminal 13 fixed to a bottom member 12, and an electrode assembly 20 with two opposing axial ends bonded to a first current collector plate 31 and a second current collector plate 32, respectively.

Thereafter, the first current collector plate 31 is directed toward the bottom member 12 and the electrode assembly 20 is inserted into and positioned in the can 10. As a result, the second current collector plate 32 is now positioned at the open end of the can 10. In the process of positioning the electrode assembly 20 in the can 10, the outer circumferential contact surface 325 of the can connecting part 324 provided at a radially outer side of the current collector plate 32 is brought into contact with the first inner surface 111 of the sidewall member 11.

Next, the first current collector plate 31 and the first electrode terminal 13 are bonded together.

Thereafter, electrolyte solution is injected into the can 10 before covering the open end of the sidewall member 11 with the cap 16.

After electrolyte injection is completed, with the open end of the sidewall member 11 covered with a cap 16, the outer circumferential bonding surface 171 and current collector plate contact surface 173 provided at the edge of the cap 16 are brought into contact with or made to face the second inner surface 115 of the sidewall member 11 and the cap contact surface 326 of the second current collector plate 32, respectively.

Thereafter, a laser is irradiated on the contact area between the second inner surface 115 of the sidewall member 11 and the outer circumferential bonding surface 171 of the cap 16 from outside the battery cell along the axial direction so as to triple weld the radially inner surface of the sidewall member 11, the bonding portion 17 of the cap 16, and the can connecting part 324 of the second current collector plate 32 to one another. Accordingly, the welding portion W bonds all of the sidewall member 11, the cap 16, and the second current collector plate 32 together.

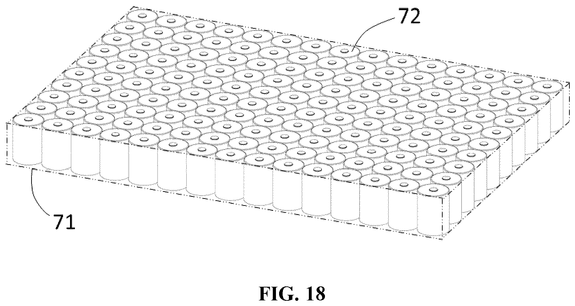

The battery cell 72 manufactured through the welding structure and the welding process described above may be positioned in the housing 71 of the battery pack 70, as shown in FIG. 18. The battery pack 70 may be constructed using one or more battery modules, each of which is an intermediate form of assembly that contains a plurality of battery cells 72. Alternatively, as shown, the battery pack 70 may be constructed directly of a plurality of battery cells 72 without any intervening battery modules.

Since the above-described battery cell 72 has a large volume, there is no particular difficulty in implementing the battery pack 70 even without using an intermediate structure such as a battery module. In addition, the battery cell 72 has less internal resistance and higher energy density than traditional battery cells. Accordingly, the energy density of the battery pack 70 including the battery cell 72 may be increased relative to traditional battery cells.

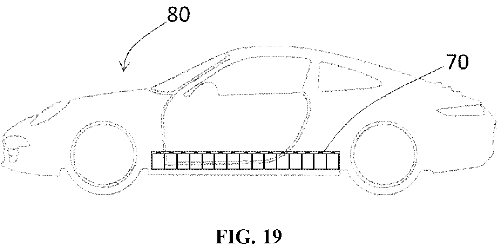

The battery pack 70 with such increased energy density may store the same energy, while reducing its volume and weight. Therefore, when the battery pack 70 to which the battery cell 72 is applied is mounted on a vehicle such as a car 80 that uses electricity as an energy source, as shown in FIG. 19, the driving range of the vehicle with respect to energy may be further increased and improved.

Although the seam welding structures and methods above were disclosed in the context of a cylindrical battery can, it should be appreciated that, within the scope of the present disclosure, such techniques could similarly be applied to other battery form factors. For example, the relevant battery cell need not have a circular cross-sectional profile orthogonal to the central longitudinal axis, but rather other cross-sectional shapes can be used, including oval, square, rectangular, partially circular, etc. Moreover, the central longitudinal axis need not be oriented orthogonally to the bottom member and/or the cap at respective opposing ends. As an example, the sidewall member of the can (along with the internal components of the can) may form a tube extending along an obliquely-oriented axis with respect to the plane defined by the bottom member and/or cap. Furthermore, the welding techniques disclosed herein could also be utilized outside of the context of cylindrical battery cans, and can also be applied to, for example, batteries having prismatic and pouch type form factors.

It is contemplated that the components described throughout this disclosure to form the battery cell may be provided separately, e.g., in a kit, or may be formed or manufactured individually and subsequently assembled to form the battery cell. For example, the individually manufactured components may include the can, the cap, the electrode assembly, and the current collector plate. As described above, the current collector plate may be provided in a first shape, e.g., extending substantially along a single plane, and the current collector plate may be elastically deformable from the first shape to a second shape during insertion of the current collector plate into the can.

According to the present disclosure, through a forced press-fit structure of the outer circumferential contact surface of the current collector plate with respect to the radially inner surface of the sidewall member, the alignment of the sidewall member and the current collector plate and the adhesion strength of the area to be welded between the sidewall member and the current collector plate are secured, and irradiation of laser for welding in the axial direction into the can may be prevented by the close contact area.

According to the present disclosure, the cap connecting part of the current collector plate is formed to be long along the axial direction such that the laser is not directly irradiated into the inner side of the can even when a portion of the laser irradiated in the axial direction for welding penetrates into the gap between the cap connecting part and the sidewall member.

According to the present disclosure, an inner diameter expansion part is formed on the radially inner surface of the sidewall member to provide a first inner diameter portion and a second inner diameter portion with different inner diameters. By press-fitting the cap connecting part of the current collector plate in the smaller diameter section of the radially inner surface of the sidewall member disposed axially below the first inner diameter portion, the press-fit force required during assembly is lowered while the press-fit force between the current collector plate and the sidewall member is concentrated on the corresponding section, thereby maintaining close contact between them.

According to the present disclosure, the inner diameter expansion part of the sidewall member functions as a barrier to prevent the penetration of laser irradiated in the axial direction for welding, thereby reliably preventing the laser from being irradiated directly into the can.

According to the present disclosure, among the sections in the axial direction of the cap connecting part, the section close to the bent part is subjected to forced press-fit into the first inner diameter portion, thereby further securing the support in the radial direction of the bent part and the electrode tab connecting part with respect to the forced press-fit portion.

According to the present disclosure, the curved surface provided by the bent part of the current collector plate guides the forced press-fit of the current collector plate during the process of inserting the current collector plate into the sidewall member, thereby increasing assembly convenience.

According to the present disclosure, since the cap is inserted to a position where the inner surface of the cap in the axial direction is in contact with the axially outer end of the cap connecting part of the current collector plate, the insertion depth of the cap is regulated through the axial extension length of the cap connecting part, thereby increasing assembly accuracy.

According to the present disclosure, during the process of inserting the cap, the inclined surface provided on the thickness reduction part of the cap comes into contact with the cap connecting part of the current collector plate such that the center alignment of the cap with respect to the center of the current collector plate may be achieved, thereby improving assembly convenience.

According to the present disclosure, as the cap is inserted, the axially outer end of the cap connecting part of the current collector plate may be pressed toward the outer side in the radial direction by the inclined surface of the thickness reduction part of the cap, and thus the axially outer end of the cap connecting part may be brought closer to, or in contact with, the second inner surface of the sidewall member. Accordingly, the adhesion property of the welding area may be improved.

According to the present disclosure, welding performance that allows welding the sidewall member, the cap, and the current collector plate together may be secured.

According to the present disclosure, stability for welding the sidewall member, the cap, and the current collector plate together may be ensured.

According to the present disclosure, the assembly time of a battery cell may be greatly reduced by welding the sidewall member, the cap, and the current collector plate together.

The above-described aspects should be understood in all respects as illustrative and not restrictive, and the scope of the present disclosure will be represented by the claims rather than the detailed description given above.

As described above, the present disclosure has been described with reference to the illustrative drawings, and various modifications may be made by those skilled in the art within the scope of the technical idea of the present disclosure. In addition, not all operational effects resulting from the present disclosure have been explicitly described and explained herein while explaining the aspects of the present disclosure, but a person having ordinary skill in the art would recognize such predictable effects.

## Claims

1. A battery cell (72) comprising:
a can (10) including a sidewall member (11) extending in an axial direction and an open end provided at a first axial end of the sidewall member (11), the first axial end of the sidewall member (11) including a first tapering portion (113) which is radially inclined;
a cap (16) covering the open end;
an electrode assembly (20) positioned in the can (10); and
a current collector plate (32) electrically connecting the electrode assembly (20) and the can (10);
wherein an inner surface of the sidewall member (11) includes:
a first inner surface (111) located adjacent to the first tapering portion (113) and defining a first inner diameter of the can (10); and
a second inner surface (115) located adjacent to the first tapering portion (113) and defining a second inner diameter of the can (10) larger than the first inner diameter,
wherein a radially outer portion of the current collector plate (32) includes:
a first surface (325) forming an outer contact surface defined by an outer circumference of the radially outer portion, wherein the first surface (325) faces or is in contact with the first inner surface (111), the first tapering portion (113) and the second inner surface (115) of the sidewall member (11); and
a second surface (326) defined by an axially outward-facing end of the radially outer portion of the current collector plate (32), wherein the second surface (326) faces and contacts an axially inward-facing surface of the cap (16), and
wherein the cap (16) includes:
a first cap surface (171) facing the inner surface of the sidewall member (11); and
a second cap surface (173), wherein the second cap surface (173) faces axially inward and contacts the second surface (326) of the radially outer portion of the current collector plate (32).

2. The battery cell of claim 1, wherein at least a portion of the inner surface of the sidewall member (11) and at least a portion of the first surface (325) of the current collector plate (32) are bonded by welding.

3. The battery cell of claim 2, wherein at least a portion of the inner surface of the sidewall member (11) and at least a portion of the first cap surface (171) are bonded by welding.

4. The battery cell of claim 2 or 3, wherein at least a portion of the second surface (326) of the radially outer portion of the current collector plate (32) and at least a portion of the second cap surface (173) are bonded by welding.

5. The battery cell of claim 1, wherein at least a portion of the inner surface of the sidewall member (11), at least a portion of the first cap surface (171), and at least a portion of the radially outer portion of the current collector plate (32) are welded together.

6. The battery cell of any one of preceding claims, wherein an outer diameter of the current collector plate (32) is greater than an inner diameter of an inner surface of the sidewall member (11) before the current collector plate (32) is inserted into the can (10), causing the first surface (325) of the radially outer portion of the current collector plate (32) to be press-fit with respect to the inner surface of the sidewall member (11).

7. The battery cell of any one of preceding claims, wherein the first tapering portion (113) of the sidewall member (11) tapers radially outward as the sidewall member (11) extends axially outward.

8. The battery cell of any one of preceding claims, wherein the radially outer portion of the current collector plate (32) includes a bent part (327) when the current collector plate (32) is positioned in the can (10) and the radially outer portion extends axially outward from the bent part (327).

9. The battery cell of claim 8, wherein the bent part (327) defines a curved surface curving from a radial direction toward an axial direction, and wherein an outer diameter of the current collector plate (32) gradually decreases as the radially outer portion of the current collector plate (32) extends axially inward, and
a minimum outer diameter of the curved surface is smaller than an inner diameter of the inner surface of the sidewall member (11).

10. The battery cell of any one of preceding claims, wherein the cap (16) comprises:
a cap body (160);
an inclined surface (161) at a radially outer portion of the cap body (160); and
a bonding portion (17) provided at a radially outer side of the cap body (160), the bonding portion (17) including the first cap surface (171) and the second cap surface (173),
wherein a first thickness of the bonding portion (17) measured in an axial direction is smaller than a second thickness of the cap body (160) measured in the axial direction.

11. The battery cell of claim 10, wherein the inclined surface (161) of the cap body (160) is provided on an axially inner surface of the cap (16) and extends axially outward as the inclined surface (161) extends radially outward.

12. The battery cell of claim 10 or 11, wherein at least a portion of the inclined surface (161) of the cap body (160) is in contact with the current collector plate (32).

13. A method of manufacturing a battery cell comprising:
providing a can (10) including a sidewall member (11) extending in an axial direction and an open end provided at a first axial end of the sidewall member (11), the first axial end of the sidewall member (11) including a first tapering portion (113) which is radially inclined, a cap (16) configured to cover the open end, and an electrode assembly (20) positioned in the can (10), wherein an inner surface of the sidewall member (11) includes:
a first inner surface (111) located adjacent to the first tapering portion (113) and defining a first inner diameter of the can (10) and
a second inner surface (115) located adjacent to the first tapering portion (113) and defining a second inner diameter of the can (10) larger than the first inner diameter;
bonding a current collector plate (32) to the electrode assembly (20);
inserting the current collector plate (32) into the can (10), wherein the inserting comprises deforming a radially outer portion of the current collector plate (32) from a first shape to a second shape, and the radially outer portion of the current collector plate (32) comprises a first surface (325) forming an outer contact surface defined by an outer circumference of the radially outer portion, wherein the first surface (325) faces or is in contact with the first inner surface (111), the first tapering portion (113) and the second inner surface (115) of the sidewall member;
contacting a first cap surface (171) with an inner surface of the sidewall member (11),
contacting a second cap surface (173) facing axially-inward with the second surface (326) of the radially outer portion of the current collector plate (32), while covering the open end of the sidewall member (11) with the cap (16); and
irradiating a laser (L) from an axially outer side to a contact area between the inner surface of the sidewall member (11) and the first cap surface (171) to weld together the inner surface of the sidewall member (11), the first cap surface (171), and the radially outer portion of the current collector plate (32).

14. The method of claim 13, wherein the radially outer portion of the current collector plate (32) contacts the inner surface of the sidewall member (11) during the inserting step.

## Patentansprüche

1. Batteriezelle (72) aufweisend:
ein Gehäuse (10) mit einem Seitenwandelement (11), das sich in einer axialen Richtung erstreckt, und einem offenen Ende, das an einem ersten axialen Ende des Seitenwandelements (11) vorgesehen ist, wobei das erste axiale Ende des Seitenwandelements (11) einen ersten verjüngten Abschnitt (113) aufweist, der radial geneigt ist;
eine Kappe (16), die das offene Ende bedeckt;
eine Elektrodenanordnung (20), die in dem Gehäuse (10) positioniert ist; und
eine Stromkollektorplatte (32), die die Elektrodenanordnung (20) und das Gehäuse (10) elektrisch verbindet;
wobei eine Innenfläche des Seitenwandelements (11) aufweist:
eine erste Innenfläche (111), die benachbart zu dem ersten verjüngten Abschnitt (113) angeordnet ist und einen ersten Innendurchmesser des Gehäuses (10) definiert; und
eine zweite Innenfläche (115), die benachbart zu dem ersten verjüngten Abschnitt (113) angeordnet ist und einen zweiten Innendurchmesser des Gehäuses (10) definiert, der größer als der erste Innendurchmesser ist,
wobei ein radial äußerer Abschnitt der Stromkollektorplatte (32) aufweist:
eine erste Oberfläche (325), die eine äußere Kontaktfläche bildet, die durch einen äußeren Umfang des radial äußeren Abschnitts definiert ist, wobei die erste Oberfläche (325) der ersten Innenfläche (111), dem ersten verjüngten Abschnitt (113) und der zweiten Innenfläche (115) des Seitenwandelements (11) zugewandt ist oder damit in Kontakt steht; und
eine zweite Oberfläche (326), die durch ein axial nach außen weisendes Ende des radial äußeren Abschnitts der Stromkollektorplatte (32) definiert ist, wobei die zweite Oberfläche (326) einer axial nach innen weisenden Oberfläche der Kappe (16) zugewandt ist und damit in Kontakt steht, und
wobei die Kappe (16) aufweist:
eine erste Kappenoberfläche (171), die der Innenfläche des Seitenwandelements (11) zugewandt ist; und
eine zweite Kappenoberfläche (173), wobei die zweite Kappenoberfläche (173) axial nach innen weist und mit der zweiten Oberfläche (326) des radial äußeren Abschnitts der Stromkollektorplatte (32) in Kontakt steht.

2. Batteriezelle nach Anspruch 1, wobei zumindest ein Abschnitt der Innenfläche des Seitenwandelements (11) und zumindest ein Abschnitt der ersten Oberfläche (325) der Stromkollektorplatte (32) durch Schweißen verbunden sind.

3. Batteriezelle nach Anspruch 2, wobei zumindest ein Abschnitt der Innenfläche des Seitenwandelements (11) und zumindest ein Abschnitt der ersten Kappenoberfläche (171) durch Schweißen verbunden sind.

4. Batteriezelle nach Anspruch 2 oder 3, wobei zumindest ein Abschnitt der zweiten Oberfläche (326) des radial äußeren Abschnitts der Stromkollektorplatte (32) und zumindest ein Abschnitt der zweiten Kappenoberfläche (173) durch Schweißen verbunden sind.

5. Batteriezelle nach Anspruch 1, wobei zumindest ein Abschnitt der Innenfläche des Seitenwandelements (11), zumindest ein Abschnitt der ersten Kappenoberfläche (171) und zumindest ein Abschnitt des radial äußeren Abschnitts der Stromkollektorplatte (32) zusammengeschweißt sind.

6. Batteriezelle nach einem der vorhergehenden Ansprüche, wobei ein Außendurchmesser der Stromkollektorplatte (32) größer ist als ein Innendurchmesser einer Innenfläche des Seitenwandelements (11), bevor die Stromkollektorplatte (32) in das Gehäuse (10) eingesetzt wird, wodurch bewirkt wird, dass die erste Oberfläche (325) des radial äußeren Abschnitts der Stromkollektorplatte (32) in Bezug auf die Innenfläche des Seitenwandelements (11) pressgepasst wird.

7. Batteriezelle nach einem der vorhergehenden Ansprüche, wobei sich der erste verjüngte Abschnitt (113) des Seitenwandelements (11) radial nach außen verjüngt, wenn sich das Seitenwandelement (11) axial nach außen erstreckt.

8. Batteriezelle nach einem der vorhergehenden Ansprüche, wobei der radial äußere Abschnitt der Stromkollektorplatte (32) einen gebogenen Teil (327) aufweist, wenn die Stromkollektorplatte (32) in dem Gehäuse (10) positioniert ist, und sich der radial äußere Abschnitt von dem gebogenen Teil (327) axial nach außen erstreckt.

9. Batteriezelle nach Anspruch 8, wobei der gebogene Teil (327) eine gekrümmte Oberfläche definiert, die sich von einer radialen Richtung zu einer axialen Richtung krümmt, und wobei ein Außendurchmesser der Stromkollektorplatte (32) allmählich abnimmt, wenn sich der radial äußere Abschnitt der Stromkollektorplatte (32) axial nach innen erstreckt, und
ein minimaler Außendurchmesser der gekrümmten Oberfläche kleiner als ein Innendurchmesser der Innenfläche des Seitenwandelements (11) ist.

10. Batteriezelle nach einem der vorhergehenden Ansprüche, wobei die Kappe (16) aufweist:
einen Kappenkörper (160);
eine geneigte Oberfläche (161) an einem radial äußeren Abschnitt des Kappenkörpers (160); und
einen Verbindungsabschnitt (17), der an einer radial äußeren Seite des Kappenkörpers (160) vorgesehen ist, wobei der Verbindungsabschnitt (17) die erste Kappenoberfläche (171) und die zweite Kappenoberfläche (173) aufweist,
wobei eine erste Dicke des Verbindungsabschnitts (17), gemessen in einer axialen Richtung, kleiner als eine zweite Dicke des Kappenkörpers (160), gemessen in der axialen Richtung, ist.

11. Batteriezelle nach Anspruch 10, wobei die geneigte Oberfläche (161) des Kappenkörpers (160) an einer axial inneren Oberfläche der Kappe (16) vorgesehen ist und sich axial nach außen erstreckt, wenn sich die geneigte Oberfläche (161) radial nach außen erstreckt.

12. Batteriezelle nach Anspruch 10 oder 11, wobei zumindest ein Abschnitt der geneigten Oberfläche (161) des Kappenkörpers (160) mit der Stromkollektorplatte (32) in Kontakt steht.

13. Verfahren zum Herstellen einer Batteriezelle, umfassend:
Bereitstellen eines Gehäuses (10) mit einem Seitenwandelement (11), das sich in einer axialen Richtung erstreckt, und einem offenen Ende, das an einem ersten axialen Ende des Seitenwandelements (11) vorgesehen ist, wobei das erste axiale Ende des Seitenwandelements (11) einen ersten verjüngten Abschnitt (113) aufweist, der radial geneigt ist, einer Kappe (16), die konfiguriert ist, um das offene Ende abzudecken, und einer Elektrodenanordnung (20), die in dem Gehäuse (10) positioniert ist, wobei eine innere Oberfläche des Seitenwandelements (11) Folgendes aufweist:
eine erste Innenfläche (111), die benachbart zu dem ersten verjüngten Abschnitt (113) angeordnet ist und einen ersten Innendurchmesser des Gehäuses (10) definiert, und
eine zweite Innenfläche (115), die benachbart zu dem ersten verjüngten Abschnitt (113) angeordnet ist und einen zweiten Innendurchmesser des Gehäuses (10) definiert, der größer als der erste Innendurchmesser ist;
Verbinden einer Stromkollektorplatte (32) mit der Elektrodenanordnung (20);
Einsetzen der Stromkollektorplatte (32) in das Gehäuse (10), wobei das Einsetzen das Verformen eines radial äußeren Abschnitts der Stromkollektorplatte (32) von einer ersten Form in eine zweite Form aufweist, und der radial äußere Abschnitt der Stromkollektorplatte (32) eine erste Oberfläche (325) aufweist, die eine äußere Kontaktfläche bildet, die durch einen äußeren Umfang des radial äußeren Abschnitts definiert ist, wobei die erste Oberfläche (325) der ersten Innenfläche (111), dem ersten verjüngten Abschnitt (113) und der zweiten Innenfläche (115) des Seitenwandelements zugewandt ist oder damit in Kontakt steht;
Inkontaktbringen einer ersten Kappenoberfläche (171) mit einer Innenfläche des Seitenwandelements (11),
Inkontaktbringen einer zweiten Kappenoberfläche (173), die axial nach innen weist, mit der zweiten Oberfläche (326) des radial äußeren Abschnitts der Stromkollektorplatte (32), während das offene Ende des Seitenwandelements (11) mit der Kappe (16) bedeckt wird; und
Bestrahlen eines Lasers (L) von einer axial äußeren Seite auf einen Kontaktbereich zwischen der Innenfläche des Seitenwandelements (11) und der ersten Kappenoberfläche (171), um die Innenfläche des Seitenwandelements (11), die erste Kappenoberfläche (171) und den radial äußeren Abschnitt der Stromkollektorplatte (32) miteinander zu verschweißen.

14. Verfahren nach Anspruch 13, wobei der radial äußere Abschnitt der Stromkollektorplatte (32) während des Einsetzschritts mit der Innenfläche des Seitenwandelements (11) in Kontakt steht.

## Revendications

1. Cellule de batterie (72) comprenant:
un boîtier (10) comprenant un élément de paroi latérale (11) s'étendant dans le sens axial, et une extrémité ouverte agencée sur une première extrémité axiale de l'élément de paroi latérale (11), la première extrémité axiale de l'élément de paroi latérale (11) incluant une première portion conique (113) inclinée radialement ;
un capuchon (16) couvrant l'extrémité ouverte ;
un ensemble d'électrodes (20) positionné dans le boîtier (10) ; et
une plaque collectrice de courant (32) reliant électriquement l'ensemble d'électrodes (20) et le boîtier (10) ;
une surface intérieure de l'élément de paroi latérale (11) comprenant :
une première surface intérieure (111) adjacente à la première partie conique (113) et définissant un premier diamètre intérieur du boîtier (10) ; et
une deuxième surface intérieure (115) adjacente à la première partie conique (113) et définissant un deuxième diamètre intérieur du boîtier (10) plus grand que le premier diamètre intérieur, une partie radialement extérieure de la plaque collectrice de courant (32) comprenant :
une première surface (325) formant une surface de contact extérieure définie par une circonférence extérieure de la partie radialement extérieure, la première surface (325) faisant face à la première surface intérieure (111), à la première partie conique (113), et à la deuxième surface intérieure (115) de l'élément de paroi latérale (11), ou au contact de celles-ci ; et
une deuxième surface (326) définie par une extrémité tournée axialement vers l'extérieur de la partie radialement extérieure de la plaque collectrice de courant (32), la deuxième surface (326) faisant face à une surface tournée axialement vers l'intérieur du capuchon (16), et au contact de celle-ci, et
le capuchon (16) comprenant :
une première surface du capuchon (171) faisant face à la surface intérieure de l'élément de paroi latérale (11) ; et
une deuxième surface de capuchon (173), la deuxième surface de capuchon (173) faisant face axialement vers l'intérieur et étant au contact de la deuxième surface (326) de la partie radialement extérieure de la plaque collectrice de courant (32).

2. Cellule de batterie selon la revendication 1, au moins une partie de la surface intérieure de l'élément de paroi latérale (11) et au moins une partie de la première surface (325) de la plaque collectrice de courant (32) étant fixées par soudage.

3. Cellule de batterie selon la revendication 2, au moins une partie de la surface intérieure de l'élément de paroi latérale (11) et au moins une partie de la première surface du capuchon (171) étant fixées par soudage.

4. Cellule de batterie selon la revendication 2 ou 3, au moins une partie de la deuxième surface (326) de la partie radialement extérieure de la plaque collectrice de courant (32) et au moins une partie de la deuxième surface du capuchon (173) étant fixées par soudage.

5. Cellule de batterie selon la revendication 1, au moins une partie de la surface intérieure de l'élément de paroi latérale (11), au moins une partie de la première surface du capuchon (171), et au moins une partie de la partie radialement extérieure de la plaque collectrice de courant (32) étant soudées ensemble.

6. Cellule de batterie selon une quelconque des revendications précédentes, un diamètre extérieur de la plaque collectrice de courant (32) étant supérieur à un diamètre intérieur d'une surface intérieure de l'élément de paroi latérale (11) avant l'insertion de la plaque collectrice de courant (32) dans le boîtier (10) en entraînant l'emmanchement de la première surface (325) de la partie radialement extérieure de la plaque collectrice de courant (32) relativement à la surface intérieure de l'élément de paroi latérale (11).

7. Cellule de batterie une quelconque des revendications précédentes, la première partie conique (113) de l'élément de paroi latérale (11) s'amenuisant radialement vers l'extérieur, alors que l'élément de paroi latérale (11) se déploie axialement vers l'extérieur.

8. Cellule de batterie selon une quelconque des revendications précédentes, la partie radialement extérieure de la plaque collectrice de courant (32) comprenant une partie pliée (327) lorsque la plaque collectrice de courant (32) est positionnée dans le boîtier (10) et que la partie radialement extérieure s'étend axialement vers l'extérieur depuis de la partie pliée (327).

9. Cellule de batterie selon la revendication 8, la partie pliée (327) définissant une surface courbe, courbant d'une sens radial vers un sens axial, et un diamètre extérieur de la plaque collectrice de courant (32) diminuant progressivement à mesure que la partie radialement extérieure de la plaque collectrice de courant (32) s'étend axialement vers l'intérieur, et
un diamètre extérieur minimum de la surface courbe étant inférieur à un diamètre intérieur de la surface intérieure de l'élément de paroi latérale (11).

10. Cellule de batterie selon une quelconque des revendications précédentes, le capuchon (16) comprenant :
un corps de capuchon (160) ;
une surface inclinée (161) sur une partie radialement extérieure du corps du capuchon (160) ; et
une partie de fixation (17) agencée sur un côté radialement extérieur du corps du capuchon (160), la partie de fixation (17) comprenant la première surface du capuchon (171) et la deuxième surface du capuchon (173),
une première épaisseur de la partie de fixation (17) mesurée dans le sens axial étant inférieure à une deuxième épaisseur du corps du capuchon (160) mesurée dans le sens axial.

11. Cellule de batterie selon la revendication 10, la surface inclinée (161) du corps du capuchon (160) étant agencée sur une surface axialement intérieure du capuchon (16) et s'étendant axialement vers l'extérieur à mesure que la surface inclinée (161) s'étend radialement vers l'extérieur.

12. Cellule de batterie selon la revendication 10 ou 11, au moins une partie de la surface inclinée (161) du corps du capuchon (160) étant au contact de la plaque collectrice de courant (32).

13. Procédé de fabrication d'une cellule de batterie comprenant :
l'agencement d'un boîtier (10) comprenant un élément de paroi latérale (11) s'étendant dans le sens axial, et une extrémité ouverte agencée sur une première extrémité axiale de l'élément de paroi latérale (11), la première extrémité axiale de l'élément de paroi latérale (11) comprenant une première portion conique (113) inclinée radialement, un capuchon (16) configuré pour couvrir l'extrémité ouverte, et un ensemble d'électrodes (20) positionné dans le capuchon (10), la surface intérieure de l'élément de paroi latérale (11) comprenant:
une première surface intérieure (111) adjacente à la première partie conique (113) et définissant un premier diamètre intérieur du boîtier (10) ; et
une deuxième surface intérieure (115) adjacente à la première partie conique (113) et définissant un deuxième diamètre intérieur du boîtier (10), plus grand que le premier diamètre intérieur;
la fixation d'une plaque collectrice de courant (32) sur l'ensemble d'électrodes (20) ;
l'insertion de la plaque collectrice de courant (32) dans le boîtier (10), l'insertion comprenant la déformation d'une partie radialement extérieure de la plaque collectrice de courant (32) d'une première forme à une deuxième forme, et la partie radialement extérieure de la plaque collectrice de courant (32) comprenant une première surface (325) formant une surface de contact extérieure définie par une circonférence extérieure de la partie radialement extérieure, la première surface (325) faisant face à la première surface intérieure (111), la première portion conique (113) et la deuxième surface intérieure (115) de l'élément de la paroi latérale, ou étant au contact de celles-ci;
la mise en contact d'une première surface du capuchon (171) avec une surface intérieure de l'élément de paroi latérale (11),
la mise en contact d'une deuxième surface de capuchon (173) faisant face axialement à la deuxième surface (326) de la partie radialement extérieure de la plaque collectrice de courant (32), tout en couvrant l'extrémité ouverte de l'élément latéral (11) avec le capuchon (16) ; et
le rayonnement d'un laser (L) d'un côté axialement extérieur à une zone de contact entre la surface intérieure de l'élément de paroi latérale (11) et la première surface du capuchon (171) afin de souder ensemble la surface intérieure de l'élément de paroi latérale (11), la première surface du capuchon (171) et la partie radialement extérieure de la plaque collectrice de courant (32).

14. Procédé selon la revendication 13, la partie radialement extérieure de la plaque collectrice de courant (32) étant au contact de la surface intérieure de l'élément de paroi latérale (11) au cours de l'étape d'insertion.
